# EUROPEAN PATENT SPECIFICATION

(11) **EP 0 430 613 B1**
(45) Date of publication and mention of the grant of the patent: **07.02.1996**
(21) Application number: 90312816.3
(22) Date of filing: 26.11.1990
(51) Int. Cl.: G11B 20/00, G11B 5/008

(54) **Apparatus for reproducing digital and analogue audio signals**
Gerät zur Wiedergabe von digitalen und analogen Audiosignalen
Appareil pour la reproduction des signaux audio numérique et analogues

(30) Priority: 29.11.1989 JP 310452/89
(43) Date of publication of application: 05.06.1991
(73) Proprietor: SONY CORPORATION, Tokyo 141 (JP)
(72) Inventor: Yada, Hiroaki, c/o Patents Division, Shinagawa-ku, Tokyo 141 (JP); Soda, Yutaka, c/o Patents Division, Shinagawa-ku, Tokyo 141 (JP); Fujiwara, Keisuke, c/o Patents Division, Shinagawa-ku, Tokyo 141 (JP); Seko, Satoru, c/o Patents Division, Shinagawa-ku, Tokyo 141 (JP); Fukuyama, Munekatsu, c/o Patents Division, Shinagawa-ku, Tokyo 141 (JP); Sekiya, Tetsuo, c/o Patents Division, Shinagawa-ku, Tokyo 141 (JP)
(74) Representative: Harris, Ian Richard

(56) References cited:
- EP-A- 0 109 674
- EP-A- 0 381 266
- US-A- 4 321 622
- US-A- 4 752 840
- PATENT ABSTRACTS OF JAPAN vol. 8, no. 192 (P-298)(1629) 4 September 1984 & JP-A-59 079 403
- PATENT ABSTRACTS OF JAPAN vol. 8, no. 51 (P-259)(1488) 8 March 1984 & JP-A-58 200 412
- FUNKSCHAU vol. 58, no. 23, November 1986, MÜNCHEN, D pages 36 - 39; H.P. SIEBERT: 'Das Magnetband hält Schritt'
- FUNKSCHAU no. 13, June 1983, MÜNCHEN, D pages 67 - 68; W. BRUCH: 'Von der Tonwalze zur Bildplatte'
- PATENT ABSTRACTS OF JAPAN vol. 3, no. 145 (E-155)30 November 1979 & JP-A-54 123 013
- PATENT ABSTRACTS OF JAPAN vol. 2, no. 115 (E-59)25 September 1978 & JP-A-53 080 205
- PATENT ABSTRACTS OF JAPAN vol. 10, no. 034 (P-427)8 February 1986 & JP-A-60 182 503

## Description

This invention relates to apparatus for reproducing digital and analogue audio signals.

Analogue audio tape recorders are known wherein an analogue signal is recorded in a longitudinal track on a magnetic tape driven past a stationary head that reproduces the analogue signal. In high fidelity audio equipment , two channels of audio signal are normally recorded to provide left (L) and right (R) stereophonic channels of audio information. Typically, the magnetic tape is housed in a cassette, such as a compact cassette, wherein the tape may be driven first in one direction to reproduce one audio programme comprising left and right channels of audio information recorded on one "side" of the tape, and then in the opposite direction to reproduce another programme of left and right channels of audio information recorded on the other "side".

In some cassette players operable with such cassettes, the two different directions of movement of the magnetic tape are achieved simply by turning the cassette over to play a "different side" of the tape. Other cassette players include a so-called "auto-reverse" feature, whereby the tape is driven in one direction to reproduce signals from one "side" and then, when the tape reaches its end, or upon selection by the user, the tape transport direction is reversed such that signals recorded on the other "side" are played back. In actuality, the two "sides" of the tape comprise upper and lower longitudinal halves of one tape surface, the two halves respectively lying above and below the centre line of the tape. Digital audio tape players also are known in which audio signals are recorded in digital form in separate longitudinal tracks, or channels of the tape. Recording or reproduction of these digital signals is achieved by using an individual head for each channel, whereby a plurality of channels are recorded or reproduced substantially simultaneously. Like the analogue audio cassette player, the digital audio cassette player, is capable of reproducing digital signals recorded in longitudinal tracks on two "sides" of the tape, that is in tracks on upper and lower halves of the tape.

In one type of digital tape player the tape must be turned over to permit the digital signals recorded on each "side" of the tape to be played back. In other digital tape players having the aforementioned "auto reverse" feature, the direction of movement of the tape is merely reversed to permit digital signals recorded on each "side" to be reproduced.

In both analogue and digital tape players having the "auto reverse" feature, two sets of heads are normally provided: one set to reproduce analogue or digital signals (as the case may be) from one half portion of the tape (for example from "side" A) when the tape is driven in the forward direction, and another set of heads to reproduce analogue or audio signals from the other half portion of the tape (for example from "side" B) when the tape is reversed. Of course, for analogue and digital tape players that do not exhibit the "auto reverse" capability, only one set of heads need be provided.

Although separate analogue audio signal reproducing apparatus and digital signal reproducing apparatus are known, it is often desirable to provide both analogue and digital reproducing capabilities in a single machine. It had been thought that such dual analogue and digital capability requires separate transducers (that is separate analogue and digital heads) as well as separate and independently operable signal processing circuitry. Of course, the use of separate sets of heads and separate processing circuits is expensive, occupies substantial space, results in bulky equipment, and is complicated to assemble and use.

European patent application EP-A-0 109 674 discloses an apparatus for reproducing M channels of digital audio signals recorded in longitudinal tracks on a record, the apparatus comprising:
a plurality of heads for reproducing the M channels of digital audio signals;
multiplexer means coupled to said plurality of heads for multiplexing the digital audio signals reproduced by said heads;
analogue-to-digital converter means coupled to said multiplexer means for digitizing the multiplexed audio signals;
digital waveform equalizer and filter means coupled to said ADC means for waveform equalizing and filtering a digitized audio signal recovered from said digital audio signals;
digital-to-analogue converter means coupled to said digital filter means for producing an analogue audio signal in response to digital signals supplied thereto by said digital filter means.

European patent application 90200172.6 filed on 24 January 1990 claiming an earliest priority date of 30 January 1989 and published on 8 August 1990 as EP-A-0 381 266, this document therefore forming prior art under Article 54 (3) EPC only, discloses apparatus for reproducing digital and analogue information. In this apparatus, respective heads are provided for digital and analogue reproduction using different gaps.

According to a first aspect of the present invention there is provided apparatus for reproducing either M channels of digital audio signals recorded in longitudinal tracks on a record medium or an analogue audio signal recorded in one longitudinal track on a record medium, the apparatus comprising:
a plurality of heads for reproducing the M channels of digital audio signals or for reproducing the analogue audio signal;
multiplexer means coupled to said plurality of heads for multiplexing the digital or analogue audio signals reproduced by said heads;
analogue-to-digital converter (ADC) means coupled to said multiplexer means for digitizing the multiplexed audio signals;
waveform equalizer means coupled to said ADC means for waveform equalizing a digitized audio signal recovered from said digital audio signals;
processing means for summing the digitized audio signals produced by said ADC means when said plurality of heads reproduce an analogue audio signal ;
digital handling means coupled to said waveform equalizer means for digitally processing the waveform equalized digitized audio signal;
digital filter means coupled to receive the summed digitized audio signals from said processing means when said plurality of heads reproduce an analogue audio signal and to receive the digitally processed audio signals from said digital handling means when said plurality of heads reproduce a digital audio signal; and
digital-to-analogue converter means coupled to said digital filter means for producing an analogue audio signal in response to digital signals supplied thereto by said digital filter means.

According to a second aspect of the present invention there is also provided apparatus for reproducing either M channels of digital audio signals recorded in longitudinal tracks on a record medium or an analogue audio signal recorded in one longitudinal track on a record medium, the apparatus comprising:
a plurality of heads for reproducing the M channels of digital audio signals or the analogue audio signal, with at least one of said heads being displaced relative to the other heads in a longitudinal direction such that a relative time shift τ is imparted between the audio signal reproduced by the displaced heads and the audio signals reproduced by the other heads;
delay means for delaying the audio signals reproduced by the displaced heads relative to the audio signals reproduced by the other heads to minimize said time shift τ ; and
summing means for summing the audio signals reproduced by said other heads and the delayed audio signals to recover the analogue audio signal recorded in said one track.

In an embodiment of this invention, apparatus is provided for reproducing either M channels of digital audio signals recorded in several longitudinal tracks on a record medium or an analogue audio signal recorded in at least one longitudinal track on a record medium. A plurality of heads reproduces the M channels of digital audio signals or the analogue audio signals; and the reproduced audio signals are multiplexed. An analogue-to-digital converter (ADC) digitizes the multiplexed audio signals which are supplied to a waveform equalizer. A processor sums the digitized audio signals produced by the ADC when an analogue audio signal is reproduced by the heads and the summed signals are supplied to a digital filter which normally receives the output of a digital handling circuit that digitally processes the waveform equalized digitized audio signal when a digital audio signal is reproduced. The output of the digital filter is converted to analogue form by a digital-to-analogue converter.

In one embodiment, the heads comprise M magneto-resistive heads, and only N of those heads (N ≤ M) are used to reproduce the analogue audio signal. In this embodiment, the aforementioned processor is included in the waveform equalizer and includes a synchronous detector for detecting digitized samples produced by the ADC and a summing circuit coupled to the synchronous detector for summing N successive samples from the ADC. As one aspect, the summing circuit comprises an adder and an accumulator interconnected such that the contents of the accumulator are summed in the adder with a sample produced by the ADC and the summed signals are loaded into the accumulator to be summed with the next sample that is produced by the ADC.

In an alternate embodiment, the heads are formed as bulk-type magnetic heads, such as induction-type heads, at least one of which is displaced relative to the others in a longitudinal direction such that a relative time shift τ is imparted between the signals reproduced by the displaced heads and the signals reproduced by the other heads. In this embodiment, the processor includes a delay circuit for selectively delaying by a predetermined amount, such as τ , the digitized samples from the ADC when analogue audio signals are reproduced by the displaced heads. As one aspect of the embodiment, the processor comprises a storage circuit for storing the digitized analogue audio samples produced at sampling intervals k, (k - 1), (k - 2), .... ( k - 1 - n), ...; and an accumulator for accumulating the sum of the digitized samples recovered from the other heads at the (k - 1)th sampling interval and the digitized samples recovered from the displaced heads at the (k - 1 -n)th sampling interval.

The invention will now be described by way of example with reference to the accompanying drawings, throughout which like parts are referred to by like references, and in which:
Figures 1A and 1B, in combination, illustrate a block diagram of one embodiment of the present invention;
Figure 2 is a schematic representation of one example of an arrangement of heads for reproducing digital or analogue audio signals in the embodiment of Figures 1A and 1B;
Figure 3 is an equivalent block diagram of a portion of Figures 1A and 1B used to reproduce analogue audio signals;
Figures 4A to 4J are timing diagrams relating to the embodiment of Figures 1A and 1B;
Figures 5A and 5B, in combination, illustrate a block diagram of another embodiment of the present invention;
Figure 6 is a schematic representation of the heads which may be used to reproduce digital or audio signals in the embodiment of Figures 5A and 5B;
Figure 7 is a flow chart for the embodiment of Figures 5A and 5B;
Figure 8 is a block diagram of yet another embodiment of the present invention;
Figures 9A to 9M are timing diagrams for the embodiment of Figure 8;
Figures 10 and 11 are block diagrams of other arrangements which may be used to reproduce analogue audio signals from a record medium;
Figure 12 is a frequency characteristic vector diagram relating to the embodiment of Figures 5A and 5B; and
Figure 13 is a graphical representation of a frequency characteristic relating to the embodiment of Figures 5A and 5B.

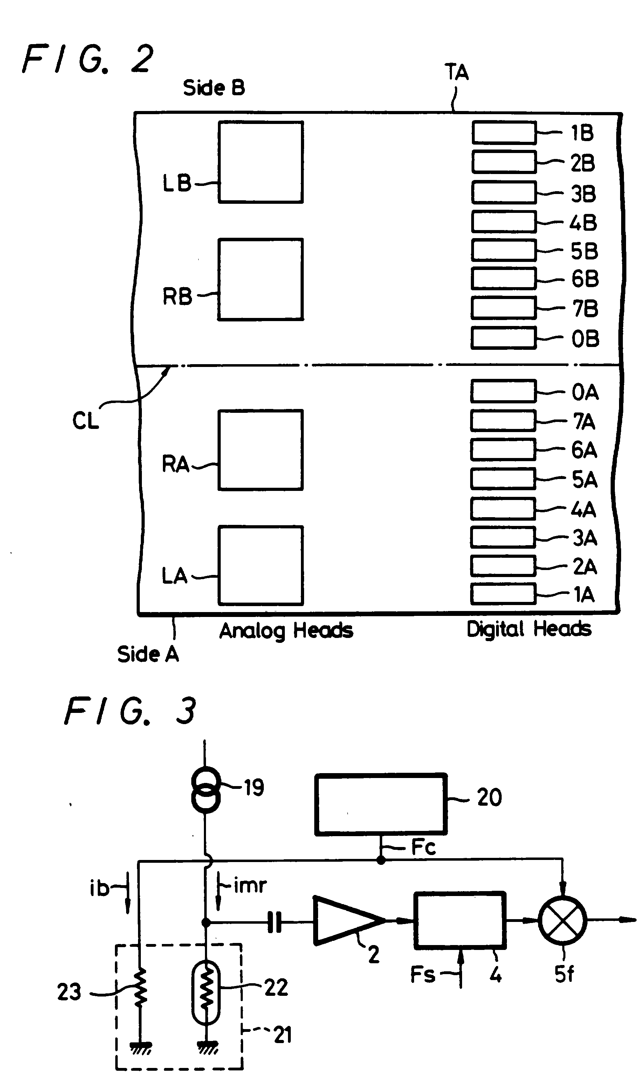

Before describing the embodiments of the present invention, reference is made to Figure 2 which schematically illustrates a magnetic tape TA on which a digital audio signal or an analogue audio signal may be recorded.

Assuming that the tape TA conforms to the standards adopted for the compact cassette, the width of the tape TA is 3.81 mm and, when analogue audio signals are recorded thereon, left-channel L and right-channel R analogue audio signals are recorded in respective longitudinal tracks by ordinary analogue recording heads. As is standard, the recording heads are positioned such that the left-channel and the right-channel signals are recorded in respective tracks on one half portion of the tape TA, such as side A. More particularly, and as is shown in Figure 2 analogue heads LA and RA are positioned to record left-channel and right-channel analogue signals respectively, on the side A of tape TA. The side A is shown in Figure 2 as the lower half portion of the tape TA relative to the centre line CL thereof. It will be appreciated that, when the compact cassette in which the tape TA is housed is turned over, the heads LA and RA record left-channel and right-channel audio signals on the side B. When the side A is recorded, the tape TA is transported in the left-to-right direction for the recording of left and right channel signals; and when the compact cassette is turned over, the tape TA may be thought of as now being driven in the right-to-left direction such that left and right channel signals are recorded on the side B. Of course, to reproduce these left-channel and right-channel audio signals, the heads LA and RA are used to play back the audio signals from the side A and, when the tape TA is turned over, the audio signals are played back from the side B.

If the recording apparatus with which the tape TA is used has an "auto reverse" feature, two sets of analogue heads are used: one set comprising heads LA and RA to record the aforementioned left and right channel audio signals on the side A; and a mirror image representation comprising heads LB and RB to record the left and right channel audio signals on the side B. Audio signals are recorded on the side A when the tape TA is transported in the left-to-right direction and audio signals are recorded on the side B when the tape TA is transported in the right-to-left direction, thus requiring two sets of playback heads. Alternatively, the reproducing apparatus may be provided with but a single set of the heads LA and RA, thus requiring the tape TA to be turned over to reproduce the audio signals from the side B. Consistent with the standards adopted for recording analogue audio signals on a compact cassette, the heads RA and RB are located closer to the centre line CL than are the heads LA and LB.

As an alternative to having analogue audio signals recorded on respective tracks on the sides A and B of the tape TA, the tape TA may have digital audio signals recorded thereon. In one technique, stereophonic digital audio signals, comprising left-channel and right-channel information, are recorded in multiple channels, or tracks, such as in M tracks, by M heads. For digital recording/playback apparatus having auto reverse capability, two sets of M heads may be provided, one set disposed on one side of the centre line CL to record or reproduce digital audio signals on the side A of the tape TA, and the other set disposed on the opposite side of the centre line CL to record or reproduce digital audio signals on the side B. If the recording/playback apparatus is not capable of operating in an auto reverse mode, only one set of heads need be provided, and signals may be recorded on both the sides A and B simply by turning the tape TA over.

Figure 2 illustrates a set of eight magnetic heads (M=8) 1A, 2A, 3A, ...7A, 0A for recording eight channels of digital audio signals on the side A. In the absence of an auto reverse capability, these same heads 1A to 7A, 0A are used to record/reproduce digital audio signals from the side B when the tape TA is transported in the reverse direction.

Typically, analogue recording/playback apparatus is not capable of recording or reproducing digital audio signals and, similarly, digital recording/playback apparatus is not capable of recording analogue audio signals. To provide dual capabilities in the same device, analogue recording/playback heads and digital recording/playback heads have heretofore been required. Thus, and with reference to Figure 2, the heads LA and RA (as well as the heads LB and RB) would be used to record or reproduce analogue audio signals only; and the heads 1A to 0A (as well as the heads 1B to 0B) would be used to record or reproduce digital audio signals only. If the analogue audio signals are stereophonic signals, they are recorded in two tracks on one side of the tape TA, and if the audio signals are monophonic signals, they are recorded in only one track. Stereophonic digital audio signals are recorded in M tracks on one side of the tape TA and, in one recording technique, the digital audio signals comprise audio information recorded by the heads 1A to 7A (as well as by the heads 1B to 7B), and cue signals recorded by the head 0A (as well as by the head 0B). The cue signals relate to the location of various audio programmes for quick access, such as by fast forward operation, and also may be used to perform other known functions. Such cue signals are useful in reproducing the digital audio information, thus, for the purpose of the present discussion, the head 0A (and the head 0B) may be thought of as being used with the heads 1A to 7A (and with the heads 1B to 7B) to record digital audio signal. Typically, left and right stereophonic audio channels are converted into digital audio signals of reduced bit rate, are interleaved and are recorded in parallel longitudinal tracks by the heads 1A to 7A (and by the heads 1B to 7B).

In an embodiment of the present invention, the heads normally used to reproduce digital audio signals are used to reproduce analogue audio signals that may have been recorded on a separate device by the analogue recording heads LA and RA (or by the heads LB and RB). A comparison of the alignment of the analogue heads with the digital heads in Figure 2 indicates that, when analogue audio signals are recorded by, for example, the head LA, the digital heads 1A, 2A and 3A reproduce respective portions, or sub-channels, of the analogue audio signal. Likewise, when analogue audio signals are recorded by the head RA, the heads 5A, 6A and 7A reproduce respective sub-channels of that analogue audio signals and, thus, are assumed not to reproduce useful information. Similarly, the head 0A is aligned between the centre line CL of the tape TA and the track of analogue audio signal recorded by the analogue head RA and, therefore, it too is assumed not to reproduce useful analogue information. In similar manner, if two sets of digital heads are provided, the heads 1B, 2B and 3B reproduce individual sub-channels of the left channel audio signal recorded by the analogue head LB, and the digital heads 5B, 6B and 7B reproduce individual sub-channels of the right channel audio signal recorded by the head RB. Here too, the heads 4B and 0B are assumed not to reproduce useful analogue information. Thus, of the M heads used for digital audio signal reproduction, N of those heads (N<M) are used to reproduce analogue audio signals. In the illustrated embodiment, M=8 and N=6, although in general, 2≤N≤M.

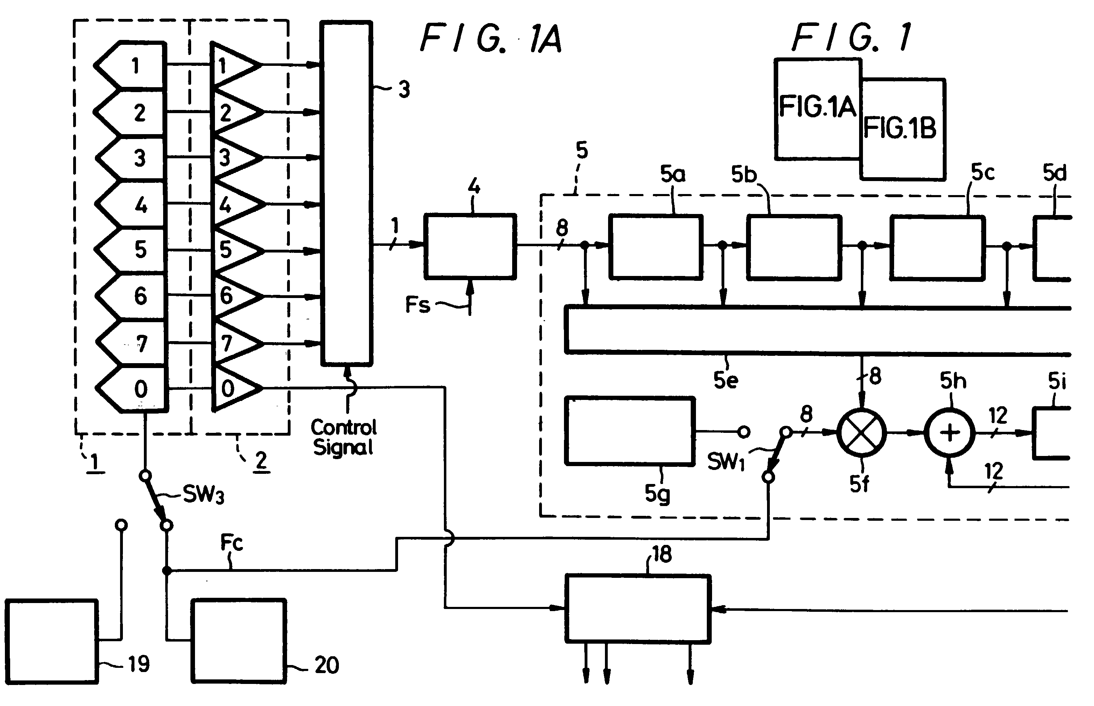

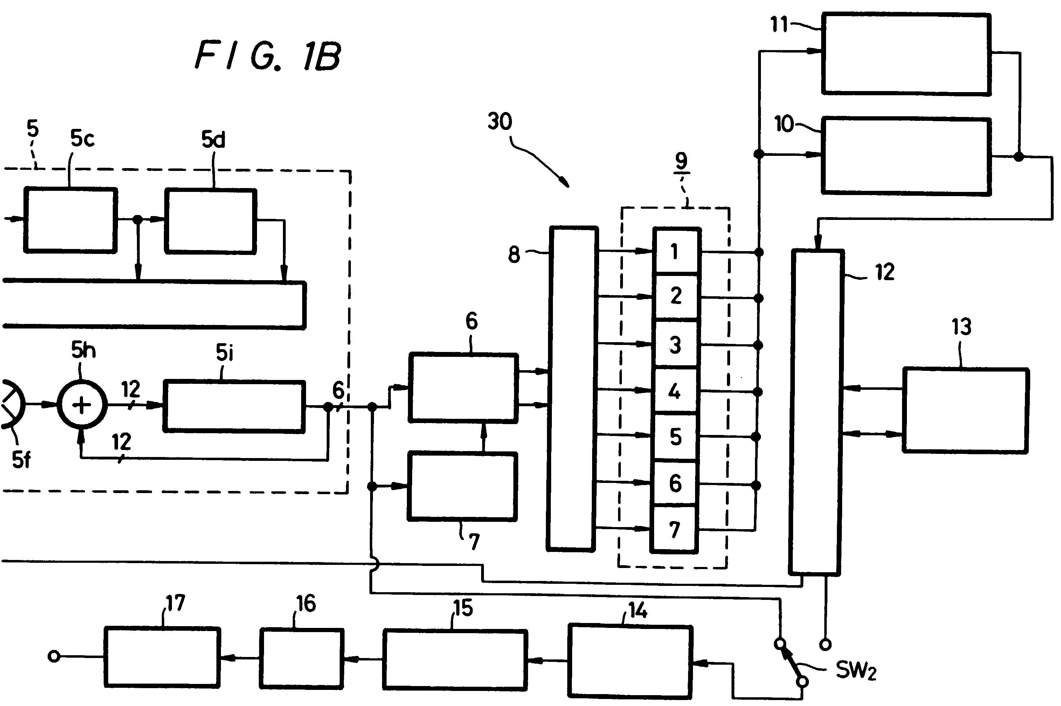

The manner in which signals are reproduced from the tape TA by the heads 1A to 7A and 0A and by the heads 1B to 7B and 0B will be discussed in conjunction with the block diagrams shown in Figures 1A and 1B. It is assumed that the digital heads 1A to 7A, 0A and 1B to 7B, 0B are constructed as magnetoresistive heads. These heads are sufficiently small as to be aligned transversely of the longitudinal axis of the tape TA. As is known, to reproduce digital signals, the magnetoresistive heads are supplied with a DC bias current which, as shown in Figure 1A, is coupled to the magnetoresistive heads from a DC bias current generator 19 by a suitable switch SW₃. The switch SW₃ is illustrated schematically as an electromechanical switch, but it will be appreciated that it is a solid-state switching element.

Although not shown in detail in Figure 1A, each magnetoresistive head comprises a magnetoresistive sensing portion and a bias portion which applies a bias magnetic field to the sensing portion. The DC bias current produced by a bias generator 19 is supplied to the bias conductor which applies a bias magnetic field to the sensing portion of the magnetoresistive head. When this sensing portion detects a changing magnetic field, as from signal recorded on the tape TA, its resistance value changes proportionally thereto; and this change in resistance value is detected to produce a signal representing the recorded signal. As will be described, when digital audio signals are reproduced from the tape TA, the bias conductor included in the magnetoresistive head is supplied with an AC clock signal produced by an AC bias clock generator 20 which is coupled to the magnetoresistive heads by the switch SW₃ and the DC bias current is supplied to the magnetoresistive sensing portion. Accordingly, when digital audio signals are to be reproduced by the apparatus of Figures 1A and 1B, the switch SW₃ couples the bias generator 19 to the magnetoresistive heads; and when analogue audio signals are to be reproduced, the switch SW₃ is operated to couple to the bias portion of the magnetoresistive heads, the AC bias clock signal produced by the clock generator 20.

The signal reproducing apparatus comprises a multiplexer 3, an analogue-to-digital converter (ADC) 4, a waveform equalizer 5, digital handling circuitry 30 (Figure 1B), a digital signal processor 14, an over-sampling filter 15 and a digital-to-analogue converter (DAC) 16. The multiplexer 3 comprises an analogue multiplexer having plurality of inputs coupled to the heads 1A to 7A (or to the heads 1B to 7B) by amplifiers 2₁, 2₂, 2₃, ...2₇, respectively. The analogue multiplexer multiplexes the sub-channel signals supplied thereto from the digital heads in time division multiplexed form so as to provided a serial signal. It is appreciated that, when digital signals are recorded on magnetic tape, the signals reproduced by the digital heads do not exhibit pure digital form. Rather than exhibiting square or rectangular waveforms, the reproduced signals exhibit analogue wave shapes; and these analogue wave shapes are multiplexed in time division serial form by the multiplexer 3. Thus, whether digital signals having analogue waveforms are reproduced by the digital heads or analogue signals are reproduced thereby, the multiplexer 3 functions to provide a serial analogue signal corresponding to the reproduced analogue wave shapes reproduced from the respective digital channels or analogue sub-channels by the heads.

The multiplexer 3 is coupled to the ADC 4 which is supplied with a sampling clock signal of frequency Fₛ. The ADC 4 samples the serial signal produced by the multiplexer 3 to provide a multi-bit digital representation of each sample. When the illustrated apparatus is used to reproduce digital audio signals, the ADC 4 functions as a wave shaper and serial-to-parallel converter for the digital signals which are reproduced with analogue wave shapes. Of course, when analogue audio signals are reproduced by the digital heads, the ADC 4 serves to sample the multiplexed sub-channel signals recovered from individual heads and to digitize each sample.

The digital audio signals which are reproduced by the illustrated apparatus are normally recorded in a time compressed mode, whereby original audio signals are digitized by a 16-bit linear quantization process, time compressed by a factor of 1/4, interleaved and recorded on seven parallel tracks. As is typical, to record an original analogue audio signal in digital form, the analogue signal is sampled at a frequency f'ₛ, that is at least twice the maximum frequency included in the analogue signal. Hence, the sampling frequency f'ₛ may be about 32 kHz, 44.1 kHz, 48 kHz or another known sampling frequency. Accordingly, to be compatible with the sampling frequency used for recording, the frequency Fₛ of the clock signal supplied to the ADC 4 for sampling the multiplexed signals recovered from the playback heads may be expressed as Fₛ = 8f'ₛ.

The waveform equalizer 5 is coupled to the ADC 4 and receives a parallel 8-bit digital signal from the ADC 4. The waveform equalizer 5 functions as a digital filter, such as a finite impulse response filter. The waveform equalizer 5 serves to correct amplitude variations in the magnetically recorded signal due to the digital pattern that may be recorded.

To best appreciate the function of the waveform equalizer 5, let it be assumed that the magnetic recording/reproducing system comprises a magnetic recording head, a magnetic tape and a magnetic playback head exhibiting a transfer function H(ω) wherein:$\text{H (ω) = exp (-a |ω|)}$ In accordance with this transfer function, the output signal level exponentially decreases as the frequency of the signal increases. If the digital signal is recorded as a non-return to zero (NRZ) pulse, the output waveform reproduced by the magnetic head appears sinusoidal having a relatively large level when a continuous "1" or "0" is recorded; but the level of this sinusoidal wave is relatively low when the recorded digital signal comprises alternating "1" and "0". The waveform equalizer 5 operates to increase the level of the sinusoidal wave in the event that alternating l's and 0's are reproduced, whereby the original digital signal, such as a square wave, may be recovered accurately from the output of the playback head.

In one example, the waveform equalizer 5 comprises a series of cascaded delay circuits 5a, 5b, 5c and 5d, each delay circuit being formed as an 8-bit shift register having sixteen stages. Thus, if the clock signal Fₛ is supplied to the delay circuits, each delay circuit imparts a time delay of about 16Tₛ wherein Tₛ = 1/Fₛ. The outputs of the delay circuits 5a to 5d, as well as the output of the ADC 4, are coupled to a data selector 5e which functions to select a desired time delay by coupling one of the delay circuit outputs therethrough. If T = 16Tₛ, then the data selector 5e selectively delays the digitized samples produced by the ADC 4 by 0 x T, 1 x T, 2 x T, 3 x T or 4 x T.

The output of the data selector 5e, that is, the selectively delayed 8-bit digitized sample produced by the ADC 4, is coupled to a multiplier 5f which multiplies the digitized sample with a predetermined coefficient. In this regard, the digital coefficient generator 5g is selectively coupled to another input of the multiplier 5f by a switch SW₁. The switch SW₁ is ganged for simultaneous operation with the switch SW₃ such that, when the playback heads reproduce a digital audio signal, the switch SW₁ couples the digital coefficient generator 5g to the multiplexer 5f, but when an analogue audio signal is reproduced, the switch SW₁ couples the clock generator 20 to the multiplier 5F. The digital coefficient generator 5g supplies a parallel 8-bit signal representing a predetermined coefficient that corresponds to the particular delay selected by the data selector 5e. Thus, the coefficient with which the selectively delayed digitized sample is multiplied is itself a function of that selected delay.

The output of the multiplier 5f is coupled to a summing circuit comprising an adder 5h and an accumulator 5i. The output of the adder 5h is coupled to the accumulator 5i which, in turn, has an output that is fed back to the adder 5h to be summed with the output of the multiplier 5f. Accordingly, the contents of the accumulator 5i, which are represented as a 12-bit parallel signal, are summed with the output of the multiplier 5f to produce a parallel 12-bit summed signal that is loaded into the accumulator 5i to be summed subsequently with the next product produced by the multiplier 5f.

The output of accumulator 5i is used as the output of the waveform equalizer 5; and in one example, the six most significant bits of the 12-bit signal stored in the accumulator 5i are provided as the waveform equalized output signal. The output of the waveform equalizer 5 is coupled to the digital handling circuit 30 which supplies a digitally processed, waveform equalized, digitized audio signal to the digital signal processor 14. More particularly, a switch SW₂, which may be ganged with switches SW₁ and SW₃, couples the output of the digital handling circuit 30 to the digital signal processor 14 when the illustrated apparatus is used to reproduce digital audio signals; and the switch SW₂ is operated to couple the output of the waveform equalizer 5 to the digital signal processor when analogue audio signals are reproduced by the playback heads.

The digital handling circuit 30 comprises a data detector 6 supplied with a clock signal generated by a phase locked loop (PLL) circuit 7, the latter being coupled to the output of the waveform equalizer 5 to extract a clock signal from the waveform equalized digitized audio signal supplied thereto. In response to the extracted clock signal, the data detector 6 recovers a time division frequency multiplexed digital audio signal corresponding to the digital audio signal reproduced from the parallel tracks by the heads 1A to 7A. One example of the data detector 6 and the PLL circuit 7 may be of the type described in Japanese laid-open patent specification 59/92410.

The time division multiplexed signal recovered by the data detector 6 is supplied to a serial-parallel converter 8 wherein the serial-bit signal is reconverted into the original 7-channel digital audio signal reproduced by the heads 1A to 7A (or by the heads 1B to 7B). The recovered seven-channel digital audio signals are supplied to a synchronizing signal separating circuit 9 to separate a synchronizing signal therefrom. The 7-channel digital audio signals then are coupled to an eight-to-ten (8/10) demodulator 10 and to a synchronizing interpolating circuit 11, from which the demodulated 7-channel digital audio signals are supplied to an input/output (I/O) circuit 12. An error correcting circuit 13 is coupled to I/O) circuit 12 to perform an error correcting operation, if necessary. Error correction of digital signals is known and further description thereof is not provided.

The purpose of the 8/10 demodulator 10 is to recover 8-bit data from 10-bit data that is normally recorded. Although not shown herein, it will be appreciated that, during a digital audio signal recording operation, 8-bit digital samples of the audio signal are converted to ten bits for recording; and the demodulator 10 functions to reconvert the recorded 10-bit signals to 8-bit format.

A system controller 18, shown in Figure 1A, is supplied with a cue signal normally reproduced by the head 0A (or the head 0B) and also with a control signal from the I/O circuit 12. The system controller 18, which forms no part of the present invention per se, functions to supply control signals to respective portions of the reproducing apparatus.

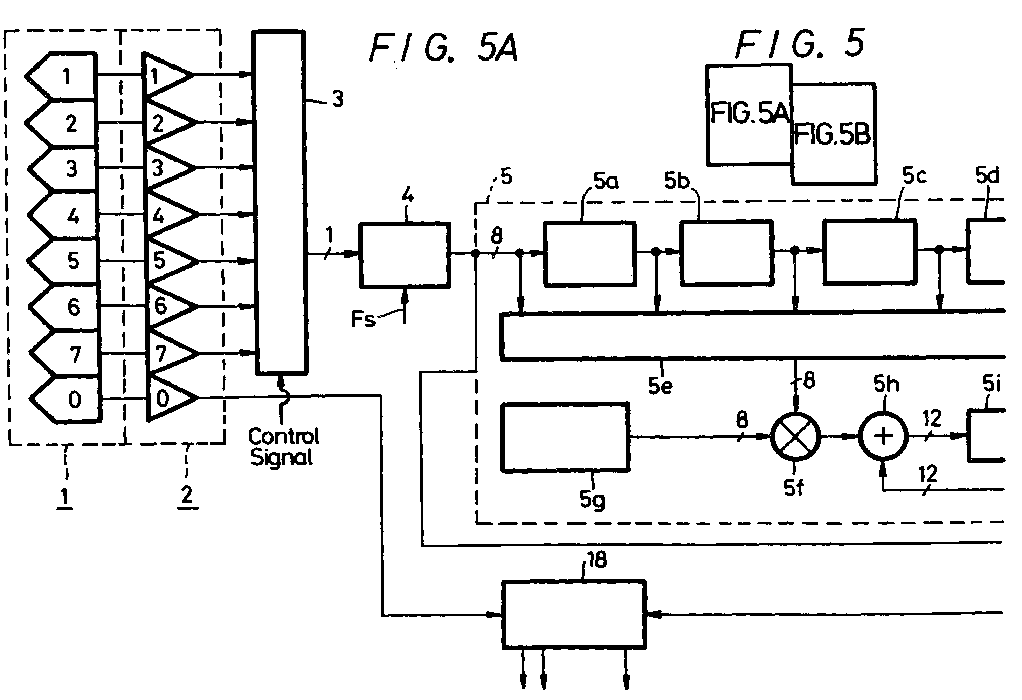

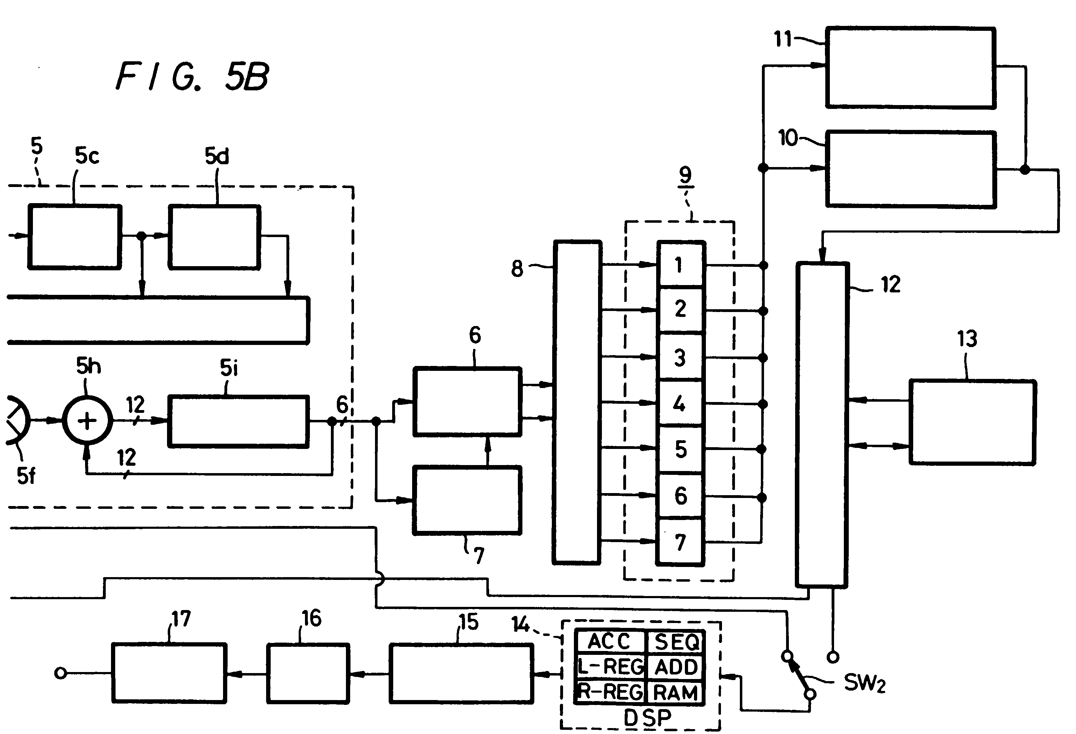

The digital signal processor 14, which is selectively coupled to the I/O circuit 12 by the switch SW₂, functions to demodulate the 7-channel digital signals in accordance with the bit rate reduction used for recording. The digital signal processor 14 includes a programmable sequence, accumulator and random access memory described further below in conjunction with Figures 5A and 5B. The output of the digital signal processor 14 is coupled to the over-sampling filter 15, thereby supplying thereto either the summed digitized audio signals provided at the output of the accumulator 5i when analogue audio signals are reproduced by the playback heads, or the digitally processed audio signals supplied to the digital handling circuit 30 when digital audio signals are reproduced by the heads. The combination of the digital signal processor 14 and the over-sampling filter 15 serves to attenuate an aliasing noise component. The filtered digital signal produced by the filter 15 is converted to analogue form by the DAC 16; and the converted analogue signal then is filtered by a low-pass filter 17 to recover analogue audio signals. Thus, whether digital or analogue audio signal are reproduced by the playback heads, the low-pass filter 17 produces an analogue audio signal which may be converted to audible sound. The filter 17 also functions to remove a final aliasing noise component, thus producing left-channel and right-channel stereophonic audio signals.

In accordance the present case, the circuitry normally used to recover and process digital audio signals is used to recover and process analogue audio signals. In particular, the manner in which the multiplier 5f in the waveform equalizer 5 is used to process analogue audio signals is best illustrated in Figure 3. Here, a magnetoresistive head 21 is shown with its sensing portion 22 and bias conductor 23. When connected to recover analogue audio signals, the AC bias clock generator 20 is coupled by the switch SW₃ to the bias conductor 23; and the sensing portion 22 is supplied with a constant bias current from DC bias current generator 19. As mentioned above, the DC bias current produced by the bias generator 19 is supplied to the sensing portion 22 when both digital and analogue audio signals are reproduced. However, the bias conductor 23 is supplied with the DC bias current when digital audio signals are played back with the AC bias clock when analogue audio signals are played back. The output of the sensing portion 22 is coupled through the amplifier 2 and the multiplexer 3 (not shown in Figure 3) to the ADC 4, whereat the recovered, multiplexed analogue signal is digitized. The multiplier 5f is supplied with the AC bias clock by the switch SW₁ when analogue audio signals are reproduced; and the AC bias clock functions to synchronously detect the digitized samples.

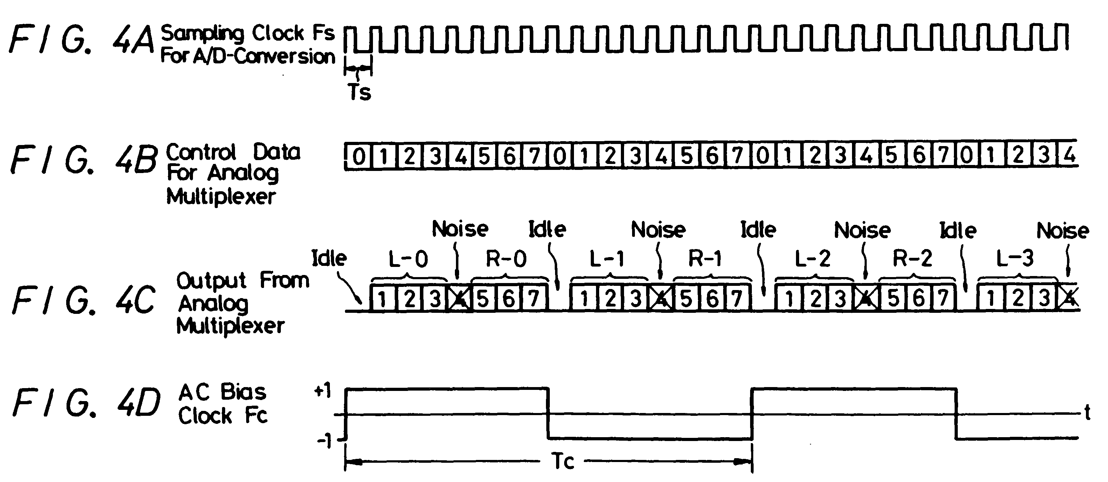

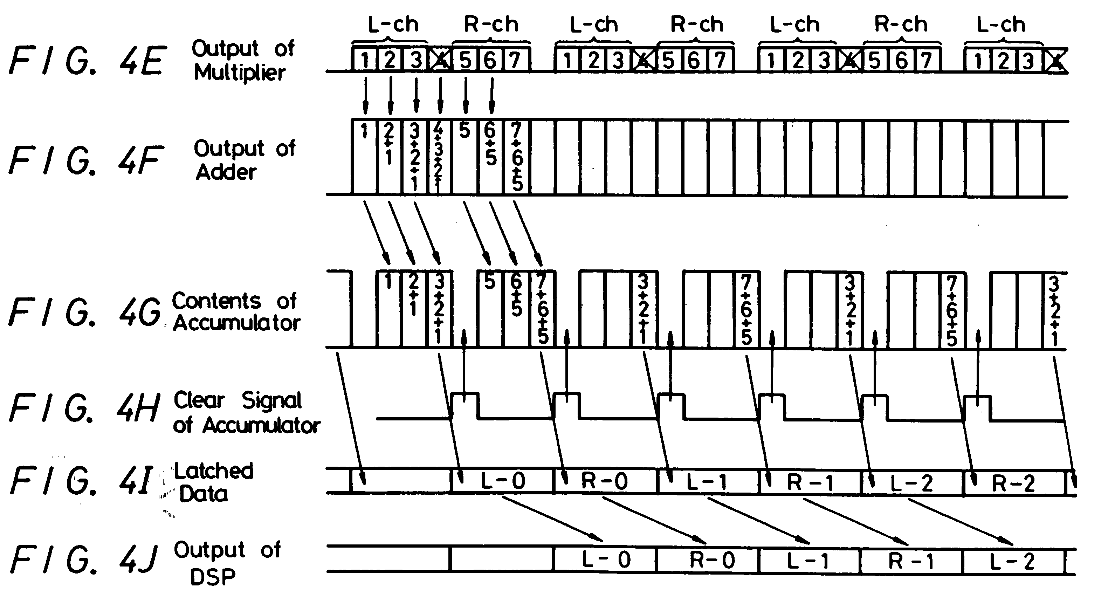

The manner in which the apparatus shown in Figures 1A and 1B reproduces analogue audio signals now will be described with reference to the waveform diagrams of Figures 4A to 4J. Figure 4A illustrates the sampling clock of frequency Fₛ having a period Tₛ supplied to the ADC 4. Figure 4B schematically represents the successive time division multiplexed samples produced by the multiplexer 3 in response to the control signal supplied thereto so as to serialize the analogue signals reproduced from the sub-channels by the heads 1A to 7A and 0A (as well as by the heads 1B to 7B and 0B). It is seen that the frequency of the multiplex control signal is equal to the sampling clock frequency Fₛ such that, during each sampling clock period, the signal produced by a respective one of the playback heads from a sub-channel is coupled through the multiplexer 3 to the ADC 4.

Figure 4C represents the output derived from the multiplexer 3. Assuming that the control signal supplied thereto exhibits repetitive intervals 0, 1, 2, ... 6, 7, 0, 1, ... and so on, it is seen from Figure 4C that, since the output from the head 0A (or the head 0B) is not supplied to the multiplexer 3, the output of the multiplexer 3 at sample time 0 (which corresponds to the output from this head) may be thought of as being "idle". At sample times 1, 2 and 3, the multiplexer 3 supplies analogue outputs from the sub-channels reproduced by the heads 1A, 2A and 3A, respectively. At sample time 4, the multiplexer 3 supplies the output reproduced by the head 4A; but from Figure 2, it is seen that the head 4A is aligned between the left-channel and right-channel analogue tracks. Hence, the information produced from the head 4A may be thought of as noise.

At sample times 5, 6 and 7, the multiplexer 3 supplies the analogue outputs from the sub-channels reproduced by the heads 5A, 6A and 7A, respectively. Then, the foregoing multiplexing process repeats.

From Figure 2, it is recognized that the heads 1A, 2A and 3A reproduce analogue signals included in the left-channel; and the heads 5A, 6A and 7A reproduce analogue signals included in the right-channel. Figure 4C conforms to this notation and indicates that the analogue signals produced by the multiplexer 3 during sample times 1, 2 and 3 are derived from the left-channel; and the analogue signals produced during sample times 5, 6 and 7 are included in the right-channel. For convenience, Figure 4C illustrates the left-channel and right-channel signals produced by the multiplexer 3 during the 0-th sampling interval, followed by the signals produced during the 1st sampling interval, followed by the signals produced during the 2nd sampling interval, and so on. These sampling intervals are defined by each half cycle of the AC bias clock signal shown in Figure 4D. A comparison of Figure 4D with Figures 4A, 4B and 4C indicates that the AC bias clock period T_{c} = 16Tₛ and sampling frequency Fₛ = 16F_{c}.

Although Figure 4C has been described in conjunction with the multiplexed signals produced by the heads 1A to 7A, it will be appreciated that the same description applies if the multiplexed signals are derived from the heads 1B to 7B.

The AC bias clock signal shown in Figure 4D is supplied to the multiplier 5f whereat it is multiplied with the digitized multiplexed samples produced by the ADC 4 from the samples supplied by the multiplexer 3. As a result, the digitized multiplexed samples are synchronously detected and may be represented as shown in Figure 4E. Figure 4E is similar to Figure 4C, except that the respective sampling intervals noted as the 0th, 1st, 2nd, and so on in Figure 4C are not similarly designated in Figure 4E.

Figure 4F illustrates the output of the adder 5h when the synchronously detected digitized multiplexed samples from the ADC 4 are summed with the contents of the accumulator 5i. Initially, it is assumed that the contents of the accumulator 5i are equivalent to zero. Thus, as shown in Figure 4F, the first digitized sample recovered by the head 1A and supplied by the multiplier 5f is summed with the zero contents of the accumulator 5i, and at the next clock pulse this sum is loaded into the accumulator 5i to be fed back and summed with the next digitized sample. Assuming that this first digitized sample is represented as 1, and consistent with the assumption that the initial contents of the accumulator 5i are represented as 0, the adder 5h produces the sum: 1 + 0 = 1. This sum is stored in the accumulator 5i.

Then, when the next digitized sample 2 recovered from the head 2A is provided at the output of the multiplier 3, it is summed with the present contents of the accumulator 5i, producing the sum: 2 + 1. This sum is loaded into the accumulator 5i at the next clock pulse for summing with the next digitized sample presented to the adder 5h.

From Figure 4E, it is seen that the next sample supplied to the adder 5h by the ADC 4 is sample 3 recovered by the head 3A. When this sample is summed with the present contents of the accumulator 5i, the resultant is represented as the sum: 3 + 2 + 1 (see Figure 4F). This sum is loaded into the accumulator 5; at the next clock pulse to be summed with the next sample supplied to the adder 5h from the ADC 4.

Figure 4G is a timing diagram representing the contents of the accumulator 5i. The contents are updated at the clock rate Fₛ to store temporarily the sum produced by the adder 5h. Figure 4G illustrates that the output of the adder 5h is loaded into the accumulator 5i at the next sample time following the production of the sum, that is, when the next sample produced by the ADC 4 is supplied to the adder 5h.

From Figures 4C and 4E, it is seen that the adder 5h is first supplied with three samples from respective sub-channels of the audio signal recorded in the left-channel track on the tape TA, followed by three samples from respective sub-channels of the audio signal recorded in the right-channel track on the tape TA. It is appreciated that the left-channel information generally is not related to the right-channel information. Accordingly, the contents of the accumulator 5i should be cleared after all of the samples from the sub-channels of the left-channel audio signal have been summed so that such samples are not summed with the sub-channel samples derived from the right channel audio signal. Figure 4H illustrates a clear, or reset, signal which may be derived from the AC bias clock shown in Figure 4D, this clear signal being generated at every fourth sampling clock time so as to erase the contents of the accumulator 5i before digitized audio signals derived from the next channel first are presented. Figure 4G illustrates the contents of the accumulator 5i from sample time to sample time, and particularly represents the clearing of the accumulator 5i in response to the clear signal shown in Figure 4H.

The contents of the accumulator 5i are supplied to the digital signal processor 14 by the switch SW₂. The digital signal processor 14 includes a storage circuit, such as an accumulator 5i or a latch circuit for storing the contents of the accumulator 5i just prior to the aforementioned resetting thereof. Figure 4I illustrates the data which are stored in this latch circuit; and it is appreciated that when the sum 3 + 2 + 1 is loaded into the accumulator 5i for the left-channel sampling interval L-0, this sum is stored in the latch circuit.

The foregoing operation of the adder 5h and the accumulator 5i for the digitized sub-channel samples derived from the track of right-channel audio signals is substantially the same as that described above. For the right-channel sampling interval R-0, if multiplexed digitized samples thereof are identified as samples 5, 6 and 7 (recovered by the heads 5A, 6A, 7A) as shown in Figure 4E, the output of the adder 5h is as shown in Figure 4F. It is appreciated that, when sample 5 is present, the contents of the accumulator 5i will have been reset; and, therefore, sample 5 is summed with 0 resulting in the sum: 5. When next-following sample 6 is supplied to the adder 5h, the accumulator 5i contains the sum 5, and these contents are summed with sample 6 resulting in the sum: 6 + 5. At the clock pulse just prior to the arrival of the next sample 7, the sum 6 + 5 is loaded into the accumulator 5. When sample 7 is supplied to the adder 5h, the contents 6 + 5 of the accumulator 5: are fed back to the adder 5h and summed with sample 7, resulting in the sum: 7 + 6 + 5. At the next clock pulse, this sum is stored in the accumulator 5i and then is latched in the latch circuit of the digital signal processor 14. The accumulator 5i then is cleared.

As the foregoing operation continues, the latch circuit included in the digital signal processor 14 stores the summed subchannel samples which, in successive sampling intervals, comprise alternating left-channel and right-channel sampling intervals L-0, R-0, L-1, R-1, L-2, R2, and so on, as illustrated in Figure 4I. It is appreciated that the summed samples for each left-channel and right-channel sampling interval form a digital reconstruction of the sub-channel analogue samples produced by the multiplexer 3 from the left-channel and right-channel analogue audio signals that are recovered by the heads 1A to 3A and 5A to 7A (or 1B to 3B and 5B to 7B). After being stored in the latch circuit of the digital signal processor 14, the digital representations of the reproduced analogue audio signals are read out, as shown in Figure 4J, to be filtered by the over-sampling filter 15 and converted to analogue form by the DAC 16. The resultant left-channel and right-channel analogue audio signals provided at the output of the DAC 16 are filtered by the low-pass filter 17 and made available for further processing, such as sound reproduction, further recording, signal transmission, or the like.

It is appreciated from the foregoing discussion that the circuitry shown in Figures 1A and 1B is used to process either digital audio signals or analogue audio signals which may be reproduced by the digital heads of the type shown in Figure 2. The circuitry which normally processes the reproduced digital audio signal serves to reduce the aliasing noise that may be present in the sub-channels of the analogue audio signal which are reproduced by the digital heads. It is appreciated that the summation of the digitized sub-channel signals represents the originally recorded left-channel or right-channel analogue audio signal.

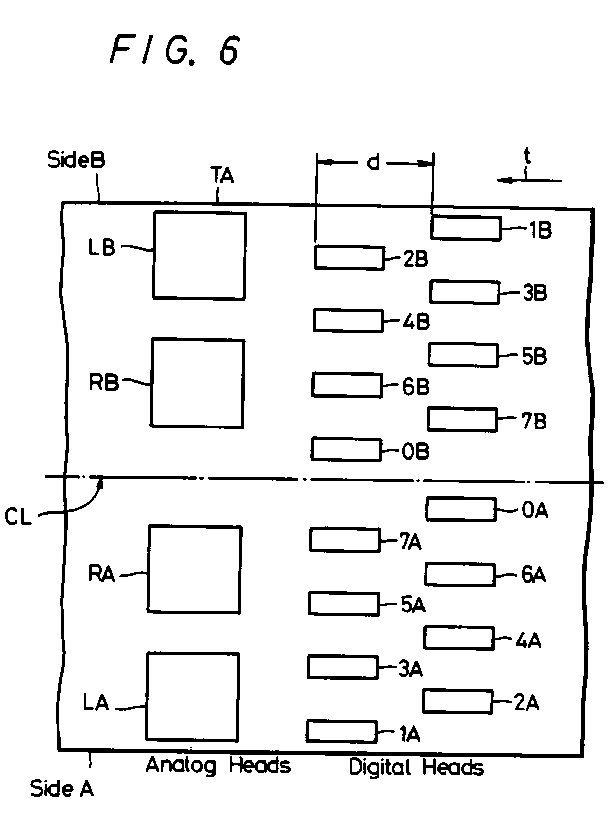

Another embodiment of the present invention is illustrated in the block diagram comprising Figures 5A and 5B. In this embodiment, the magnetic heads which are used to reproduce digital or analogue audio signals differ from the magnetoresistive heads that are used in the aforedescribed embodiment. In particular, in this embodiment, rather than using magnetoresistive heads, so-called "bulk-type" heads, such as induction-type magnetic heads, are used. These bulk-type magnetic heads are somewhat larger than the aforedescribed magnetoresistive heads and thus one complete set of heads is not aligned transversely of the longitudinal direction of the tape TA. Rather, alternate ones of these bulk-type heads are staggered, or longitudinally displaced from each other, in the manner shown in Figure 6.

As was the case for the arrangement of heads shown in Figure 2, these heads with the suffix "A" are used to reproduce signals recorded on the side A and, if the reproducing apparatus has auto reverse capability, those heads identified with the suffix "B" are used to reproduce signals from the side B. In the absence of an auto reverse mode, the "A" heads are used to reproduce signals recorded on the side A and, when the tape TA is turned over, to reproduce those signals recorded on the side B. Figure 6 also illustrates the relative positioning of the digital heads 1A to 7A and 0A (and 1B to 7B and 0B) relative to the tracks in which the left-channel and right-channel analogue audio signals are recorded by analogue heads. As before, the heads 1A, 2A and 3A are positioned to reproduce the left-channel analogue audio signals and the heads 5A, 6A and 7A are positioned to reproduce the right-channel analogue audio signals. These digital heads, of course, reproduce M channels of digital audio signals as well. As in the previous embodiment, N≤M and, as one example, M=8 and N=6.

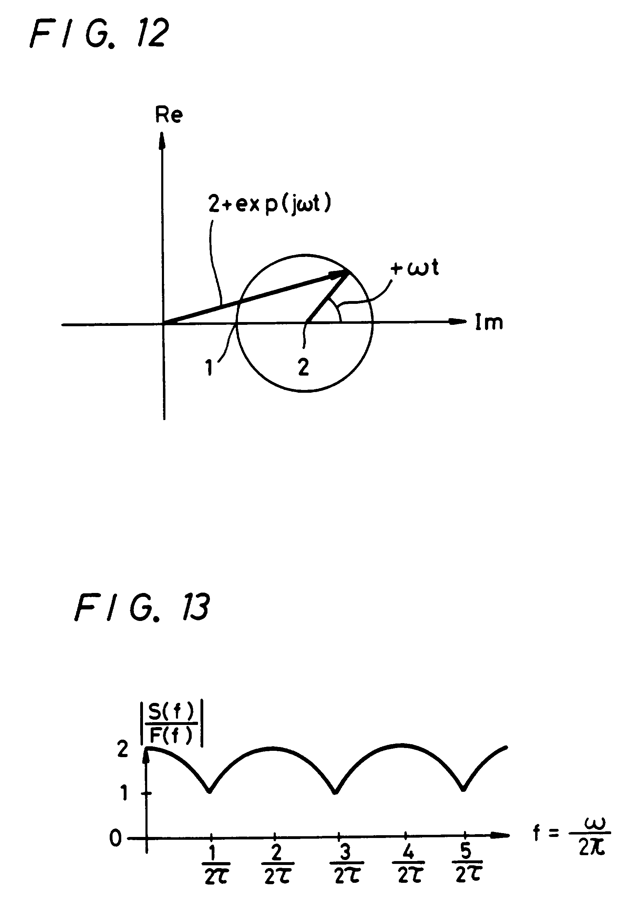

Assuming that successive heads are longitudinally displaced from each other by the distance d, for example assuming that the odd-numbered heads are displaced by the distance d from the even-numbered heads, and further assuming that the tape TA is transported in the direction shown in Figure 6 at a transport speed of y, then at any given time, the signals reproduced from the side A by the odd-numbered heads are delayed relative to the signals reproduced by the even-numbered heads by the delay time τ. When analogue audio signals are reproduced by the digital heads, sub-channels of the left-channel analogue audio signals are reproduced by the heads 1A, 2A and 3A and sub-channels of the right-channel analogue audio signals are reproduced by the heads 5A, 6A and 7A. Assuming that the analogue audio signals reproduced by the heads 1A and 3A are represented as F(t), wherein t represents time, the analogue audio signal reproduced by the head 2A may be expressed as F(t + τ). If each head is assumed to reproduce a sub-channel of the left-channel (or right-channel) analogue audio signal, then the left-channel audio signal (as an example) may be represented by the sum of the sub-channel signals reproduced by the heads 1A to 3A. If the sum of these signals is represented as S(t), then:$\text{S(t) = 2 F(t) + F(t + τ)}$ The frequency characteristic of this summed signal S(t) may be expressed as follows:$\text{|S (ω)| / F |(ω)| = |[2F(ω) + F(ω) exp(+jωτ)]/F(ω)} \text{= 2 + exp(+jωτ)}$ A vector representation of this frequency characteristic of the summed sub-channels is illustrated in Figure 12. The frequency characteristic itself is graphically depicted in Figure 13. As shown in Figure 13, a dip, or minimum magnitude, occurs at those frequencies f wherein f =1/2τ, 3/2 τ, 5/2 τ, and so on, which results in a deteriorated frequency characteristic of the reproduced summed sub-channels.

This deterioration in the frequency characteristic is due to the delay (or advance) between the sub-channel signals reproduced by the heads 1A and 3A and the sub-channel signals reproduced by the head 2A. If the sub-channel signal reproduced by the head 2A is removed from the sum S(t), the signal-to-noise (S/N) ratio is degraded by a factor up to approximately $\sqrt{\text{2/3}} \text{.}$ The embodiment shown in Figures 4A and 5B avoids a deteriorated frequency characteristic without degrading the S/N ratio. This is achieved by delaying the sub-channel signals reproduced by the head 2a by the delay time τ and then adding this delayed signal to the sub-channel signals reproduced by the heads 1A and 3A. Likewise, the sub-channel signals reproduced by the head 6A and delayed by τ and added to the sub-channel signals reproduced by the heads 5A and 7A. The resultant summed signal is an accurate reproduction of, for example, the left-channel (or, when the heads 5A to 7A are used, the right-channel) analogue audio signal.

Turning to Figures 5A and 5B, the circuitry illustrated therein is similar to that discussed hereinabove in conjunction with Figures 1A and 1B and like reference numerals are used to identify the same elements. Further duplicative description is not provided. It will, of course, be appreciated that the embodiment shown in Figures 5A and 5B functions to reproduce digital audio signals in substantially the same way as that of the embodiment shown in Figures 1A and 1B. In the presently described embodiment, however, the DC bias current generator 19 and the AC bias clock generator 20 are not provided because the heads are not magnetoresistive. Furthermore, the multiplier 5f, the adder 5h and the accumulator 5i included in the waveform equalizer 5 are not used to recover the summed sub-channel signals as was done in the embodiment of Figures 1A and 1B. Rather, in the embodiment of Figures 5A and 5B, the output of the ADC 4 is coupled directly to the digital signal processor 14 by the switch SW₂ when the apparatus is used to reproduce analogue audio signals.

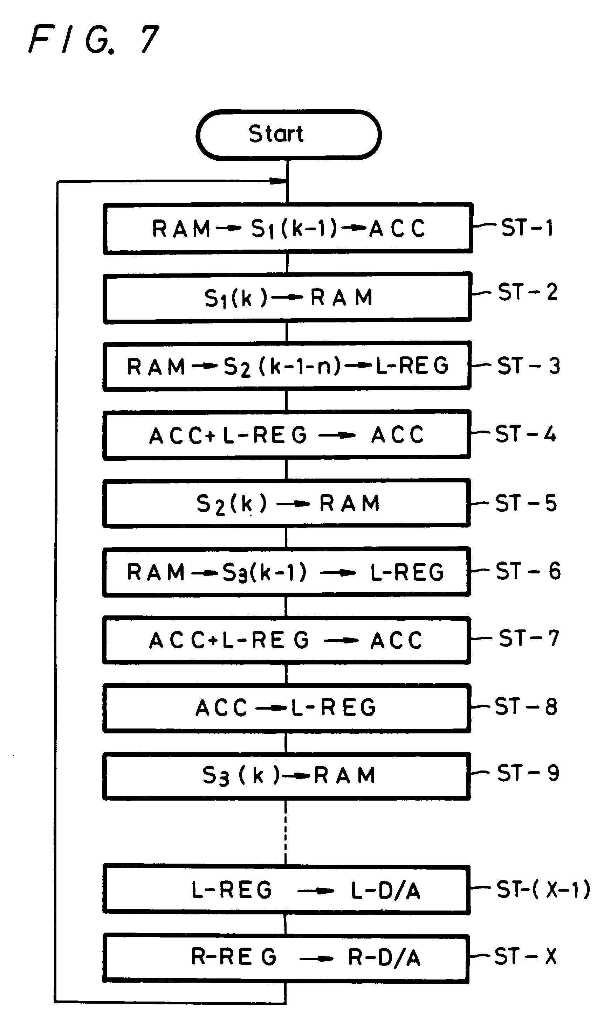

The digital signal processor 14 shown in Figure 5B delays the sub-channel signal produced by the head 2A (and also delays the sub-channel signal produced by the head 6A) by the time delay τ, and then sums this delayed signal with the undelayed sub-channel signals recovered from the heads 1A and 3A (or from the heads 5A and 7A, as the case may be). Accordingly, the digital signal processor 14 includes a programmable sequencer SEQ, an accumulator ACC, a left-channel register L-REG, a right-channel register R-REG, an adder ADD and a random access memory RAM. The programmable sequencer SE operates in accordance with the programmed routine illustrated by the flow chart shown in Figure 7 and now described.

Let it be assumed that the ADC 4 digitizes the multiplexed analogue audio signals in the manner shown in Figure 4C. Let it be further assumed that sampling interval L-0 is produced at sampling interval k, sampling interval L-1 is produced at sampling interval k+1, sampling interval L-2 is produced at sampling interval k+2, and so on. In similar fashion, the right-channel sampling intervals R-0, R-1, R-2 are produced at sampling intervals k, k+1, k+2, and so on. It is appreciated that the time division multiplexed sub-channel samples are produced successively during each sampling interval. Now, when the routine of Figure 7 begins, instruction ST-1 operates to read from the RAM, sample S₁(k-1) which is loaded into the accumulator ACC. From Figure 4C, it will be appreciated that this sample is derived from the sub-channel signal reproduced by the head 1A during the (k-1)th interval.

The routine then advances to instruction ST-2, wherein sample S₁(k), which is assumed to be the sample presently derived at the k-th interval from the head 1A, is written into the RAM. The routine then advances to instruction ST-3, whereupon sample S₂(k-1-n), which had been derived from the head 2A during the (k-1-n)th interval and had been stored, is read from the RAM and loaded into the left-channel register. It is appreciated that this sample had been derived (1+n) sampling intervals preceding the present k-th sampling interval.

Thereafter, the routine advances to instruction ST-4, wherein the contents of the accumulator ACC are summed with the contents of the left-channel register L-REG; and this sum is loaded into the accumulator ACC. Hence, at this time, the accumulator ACC is loaded with the following sum:${\text{S}}_{\text{1}} {\text{(k-1) + S}}_{\text{2}} \text{(k-1-n)}$ Advancing to instruction ST-5, the digitized sample S₂(k), presently derived from the head 2A, is written into the RAM, The routine then advances to instruction ST-6 wherein sample S₃(k-1) is read from the RAM and written into the left-channel register L-REG. That is, the digitized sample produced at the (k-1)th sampling interval from the sub-channel signal reproduced by the head 3A and which had been stored in the RAM now is stored in the left-channel register L-REG. Then, instruction ST-7 is carried out wherein the present contents of the accumulator ACC are summed with the present contents of the left-channel register L-REG and the sum is loaded into the accumulator ACC. Thus, the following sum is loaded into the accumulator ACC:${\text{S}}_{\text{1}} {\text{(k-1) + S}}_{\text{2}} {\text{(k-1-n) + S}}_{\text{3}} \text{(k-1)}$ This sum, which is stored temporarily in the accumulator ACC, then is written into the left-channel register L-REG, as indicated by instruction ST-8. Then, the routine advances to instruction ST-9 for writing into the RAM the k-th sample S₃(k) presently derived from the head 3A.

The illustrated routine is repeated for processing similar signals recovered from the right-channel analogue audio signal by the heads 5A, 6A and 7A. It is appreciated that after this routine has been repeated, the right-channel register stores therein the following sum:${\text{S}}_{\text{5}} {\text{(k-1) + S}}_{\text{6}} {\text{(k-1-n) + S}}_{\text{7}} \text{(k-1)}$

It is recognized that the RAM stores the digitized multiplexed audio signals produced by the ADC 4 at sampling intervals k, (k-1), (k-2), ... (k-1-n), and so on. Selected ones of these stored digitized multiplexed audio signals are summed to recover a digitized representation of the original analogue audio signals; and the value "n" is a function of the time delay τ caused by the displaced heads (2A, 6A) and the sampling interval Tₛ. That is, in the embodiment described herein, the digitized sample derived from the head 2A (or the digitized sample derived from the head 6A) that is n samples away from the digitized audio signals derived from the heads 1A and 3A (or from the heads 5A and 7A) is combined therewith to compensate for the delay τ.

After the left-channel register L-REG and right-channel register R-REG are loaded with their respective summed sub-channels, the contents thereof are read out at instructions ST-(X-1) and ST-X, respectively, to be converted to analogue form by the DAC 16. If desired, separate left-channel and right-channel digital-to-analogue converters may be used to convert the summed digitized left-channel and right-channel samples into analogue samples. Thereafter, the routine returns to its initial instruction ST-1 to repeat the foregoing for the next sampling interval. Hence, after the L-0 and R-0 samples are processed in the foregoing manner, a similar processing is effected for the L-1 and R-1 samples.

By programming the programmable sequencer SEQ included in digital signal processor 14 in the manner illustrated in Figure 7, the digital signal processor 14 which is normally used to process digital audio signals can be used to recover analogue audio signals that have been reproduced by digital heads and digitized by the ADC 4. Accordingly, the analogue audio signal may be reproduced with high sensitivity and improved frequency characteristics. The undesired characteristic illustrated in Figure 13 is avoided by the embodiment discussed above.

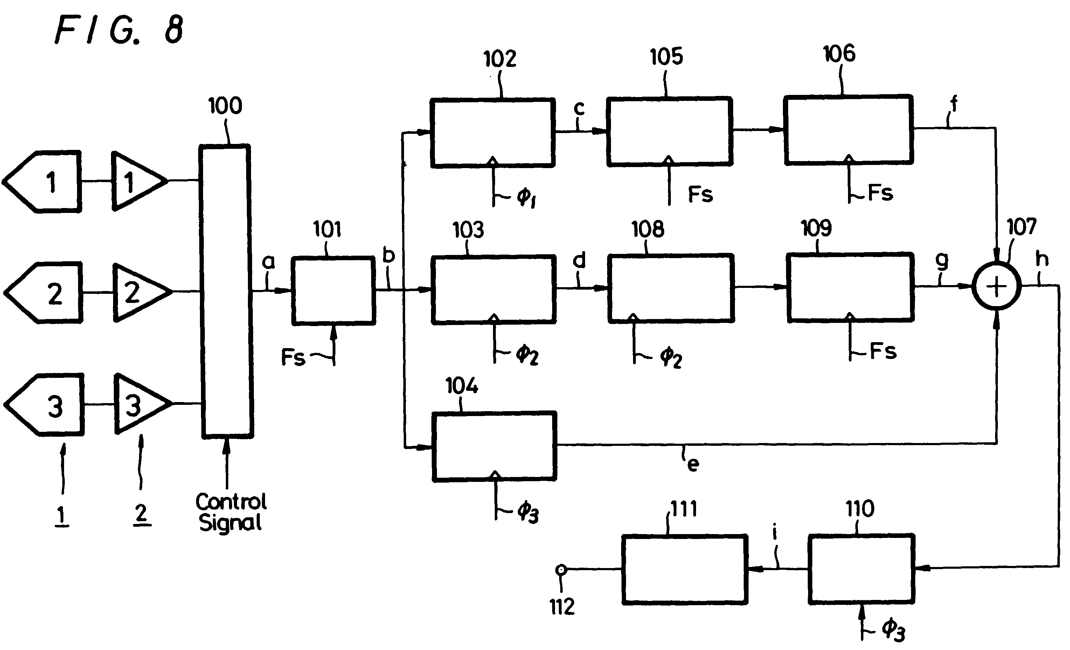

Another embodiment which can be used to recover analogue audio signals that are reproduced by digital heads is illustrated in Figure 8. For simplification, Figure 8 illustrates only the heads 1A, 2A and 3A for reproducing the sub-channels included in, for example, the left-channel analogue audio signal that may be recorded on the tape TA. It is assumed that these digital heads are formed as bulk-type heads similar to those discussed above in conjunction with Figure 6. Accordingly, although not shown in Figure 8, it will be appreciated that the head 2A is longitudinally displaced with respect to the heads 1A and 3A.

The embodiment of Figure 8 comprises a multiplexer 100, an analogue-to-digital converter (ADC) 101, individual retiming or delay channels, a summing circuit 107 and a digital-to-analogue (DAC) converter 110. The multiplexer 100 may be similar to the aforedescribed multiplexer 3 and is supplied with a control signal for sampling, in succession, the analogue audio signals reproduced by the heads 1A, 2A and 3A and supplied thereto by amplifiers 2₁, 2₂ and 2₃, respectively. The multiplexer 100 is coupled to the ADC 101 which digitizes each multiplexed analogue sample. The output of the ADC 101 is coupled in common to the individual delay channels.

A first delay channel comprises a clocked flip-flop circuit, such as a D-type flip-flop circuit 102 supplied with a first phase φ₁ of a timing signal whose frequency is, for example, Fₛ/3, wherein Fₛ is the sampling frequency supplied to the ADC 101 (and also is the frequency of the control signal supplied to the multiplexer 100). The flip-flop circuit 102 is connected in cascade with D-type flip-flop circuits 105 and 106 which are supplied with clock pulses of a frequency equal to the sampling frequency Fₛ.

A second delay channel coupled to the ADC 101 comprises a D-type flip-flop circuit 103 supplied with a second phase φ₂ of the timing signal whose frequency is Fₛ/3. The output of the flip-flop circuit 103 is connected to a shift register 108 which also is supplied with the phase φ₂ of the aforementioned timing signal; and the output of this shift register 108 is coupled to another D-type flip-flop circuit 109 to which the clock signal of sampling frequency Fₛ is supplied.

The third delay channel comprises simply a D-type flip-flop circuit 104 supplied with a third phase φ₃ of the timing signal whose frequency is Fₛ/3. The respective outputs of the delay channels are coupled to the summing circuit 107; and the output of this summing circuit 107 is connected to the DAC 110. The DAC 110 is supplied with the third phase φ₃ of the timing signal of frequency Fₛ/3 to produce an analogue output. The DAC 110 is coupled to a low-pass filter 111 which smooths the analogue output and supplies the resultant analogue audio signal to an output terminal 112.

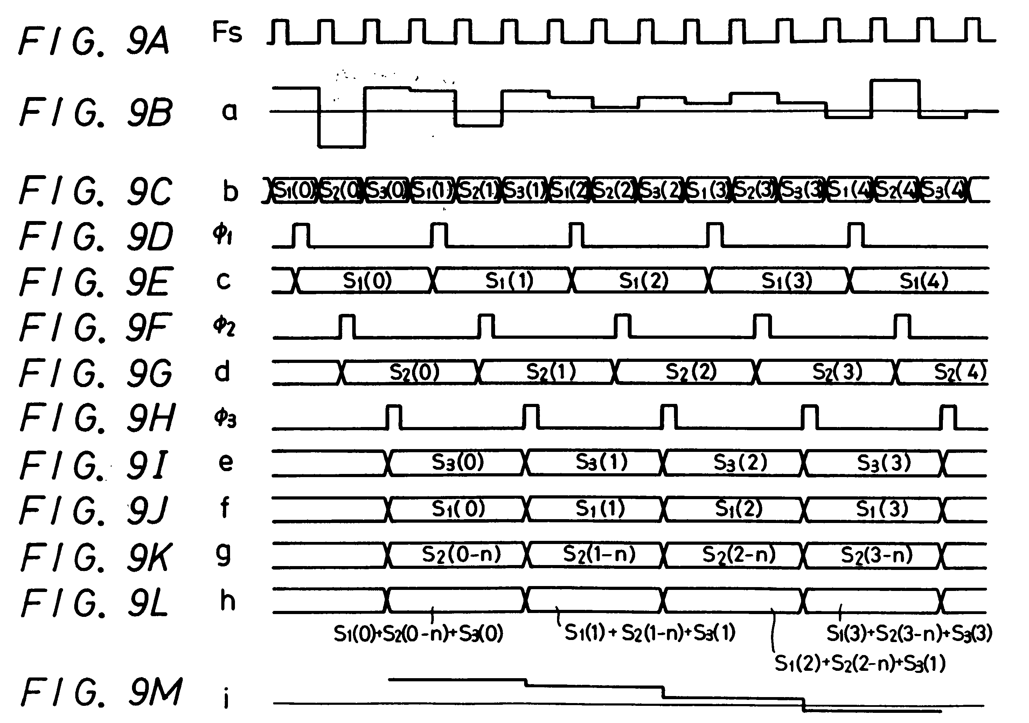

The manner in which the embodiment shown in Figure 8 operates will now be described in conjunction with the timing waveforms shown in Figures 9A to 9M. Figure 9A illustrates the sampling clock frequency Fₛ. Figure 9B illustrates the time division multiplexed analogue audio signals reproduced by the heads 1A, 2A and 3A. It will be appreciated that, because of the longitudinal displacement of the head 2A relative to the heads 1A and 3A, the sub-channel signals produced by the heads 1A and 3A are delayed with respect to the sub-channel signal reproduced by the head 2A. The multiplexed sub-channel signals shown in Figure 9B are digitized by the ADC 101, resulting in the successive digitized samples shown in Figure 9C.

Phase φ₁ of the timing signal shown in Figure 9D clocks the digitized output of the ADC 101 into the flip-flop circuit 102. From Figure 9D, it is seen that phase φ₁ coincides with the digitized samples recovered from the head 1A. Hence, sample S₁(0) first is clocked into the flip-flop circuit 102, followed by sample S₁(1), followed by sample S₁(2), and so on. Figure 9E illustrates the output of the flip-flop circuit 102 which, at every phase φ₁ comprises the next digitized sample recovered from the head 1A. These digitized samples are re-clocked by the flip-flop circuits 105 and 106 so as to be time-shifted as shown in Figure 9J.

The digitized samples produced by the ADC 101 also are clocked into the flip-flop circuit 103 in response to phase φ₂ of the timing signal shown in Figure 9F. It is seen that phase φ₂ coincides with samples S₂(0), S₂(1), S₂(2), and so on. That is, phase φ₂ coincides with the digitized samples recovered from the head 2A.

The output of the flip-flop circuit 103 is illustrated in Figure 9G and comprises successive samples derived from the head 2A. Each such sample is shifted in the shift register 108 in response to phase φ₂ resulting in a delay time substantially equal to τ. For example, the shift register 108 may comprise n stages such that, after a sample is shifted therethrough, it is subjected to a time delay τ. The shifted sample then is re-clocked by the flip-flop circuit 109. As a result of the time delay produced by the shift register 108 and the re-clocking provided by the flip-flop circuit 109, the delayed sample derived from the head 2A is as shown in Figure 9K. It will be appreciated that this delayed sample from the head 2A is now in time coincidence with the sample derived from the head 1A and re-clocked by the flip-flop circuits 105 and 106, as shown in Figure 9J.

Finally, the digitized samples produced by the ADC 101 are loaded into the flip-flop circuit 104 in response to phase φ₃ of the timing signal shown in Figure 9H. It is seen that this phase φ₃ coincides with digitized samples S₃(0), S₃(1), S₃(2), and so on. Accordingly, only the digitized samples derived from the head 3A are clocked into the flip-flop circuit 104, as shown in Figure 9I. It is seen that these samples which are extracted from the digitized multiplexed audio signals are in time coincidence with the samples derived from the head 1A and the samples derived from the head 2A (illustrated in Figures 9J and 9K, respectively). This time coincidence is attained because phase φ₁ leads phase φ₃ by two clock periods and phase φ₂ leads phase φ₃ by one clock period; and the digitized samples extracted by phase φ₁ are delayed by two clock periods by the flip-flop circuits 105 and 106 and the digitized samples extracted by phase φ₂ are delayed by one clock period by the flip-flop circuit 109. These delays imparted to the samples recovered from the heads 1a and 2A thus result in time coincidence of the samples recovered from all three heads 1A to 3A.

Furthermore, by delaying the samples recovered from the head 2A by n stages in the shift register 108, the n-th sample from the head 2A is shifted by time delay τ into time coincidence with the samples then being reproduced by the heads la and 3A because τ is a function of n and the frequency of the timing signal supplied to the shift register 108. From Figures 9I, 9J and 9K, it is seen that sub-channel samples S₁(0), S₂(0-n) and S₃(0) are in time coincidence; and these coincident samples are summed in the summing circuit 107. Figure 9L represents the summation of these time coincident samples. Even although the sub-channel reproduced by the head 2A is advanced relative to the sub-channels reproduced by the heads 1A and 3A, the time delay imparted thereto by the shift register 108 effectively cancels this advance.

The summed signals produced by the summing circuit 107 are converted from digital to analogue form by the DAC 110, as represented by the waveform of Figure 9M. The analogue signal is then filtered to reproduce the original analogue signal that had been recorded on the tape TA and played back in respective sub-channels by the heads 1A, 2A and 3A.

Although the circuitry illustrated in Figure 8 has been described in conjunction with the reproduction of only one channel of stereophonic analogue signals, it will be appreciated that this same circuitry can be used to recover the other channel as well. For example, if the multiplexer 100 is coupled to the heads 5A, 6A and 7A, then the illustrated circuitry may be operated alternately to recover the left-channel audio signal and the right-channel audio signal. As a modification to the illustrated circuitry, another set of multiplexer, ADC and delay channels may be used to recover the right-channel audio signals. In any event, it is appreciated that the circuit arrangement shown in Figure 8 and described in conjunction with Figures 9A to 9M operates to recover analogue audio signals accurately and with good frequency characteristics even when using bulk-type magnetic heads.

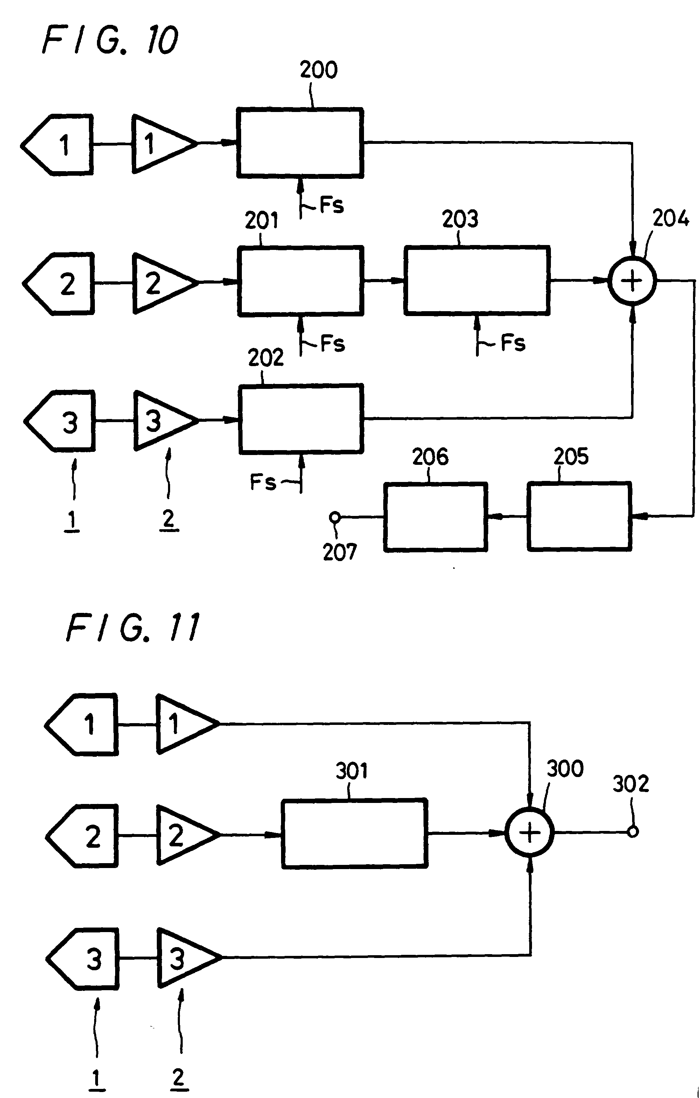

Figure 10 illustrates a simplified arrangement by which bulk-type magnetic heads, such as those used in the Figure 8 embodiment, normally operative to reproduce digital signals are used to reproduce analogue audio signals. As before, each head is assumed to reproduce a sub-channel of, for example, the left-channel (or the right-channel) audio signal recorded in a longitudinal track on the tape TA. Since bulk-type magnetic heads are used, it also is assumed that the head 2A is longitudinally displaced from the heads 1A and 3A such that the sub-channel signals reproduced thereby are advanced from the sub-channel signals reproduced by the heads 1A and 3A by τ. The Figure 10 arrangement serves to cancel this advance by delaying the signals recovered from the head 2A by an equal amount τ.

Here, three separate ADCs are used. As shown, ADC 201 digitizes the sub-channel audio signals reproduced by the head 2A and ADC 202 digitizes the sub-channel audio signals reproduced by the head 3A. Preferably, each ADC is supplied with a sampling clock of frequency Fₛ. The ADC 201 is coupled to a suitable digital delay circuit 203, such as a multi-stage register, which also is supplied with the clock frequency Fₛ. The delay circuit 203 functions to delay each digitized sample produced by the ADC 201 by the time delay τ. Hence, each digitized sample recovered from the head 2A is sufficiently delayed as to be in time coincidence with the corresponding samples derived from adjacent sub-channels by the heads 1A and 3A.

These time coincident samples are supplied to and summed in a summing circuit 204, resulting in a reconstructed digitized signal representing the summation of the sub-channels recovered by the heads 1A to 3A. This reconstructed digital signal is converted to analogue form by a DAC 205 and supplied to an output terminal 207 by low-pass filter 206. Hence, an analogue signal corresponding to, for example, the left-channel signal reproduced by the heads 1A to 3A is supplied to the output terminal 207. Alternatively, if the arrangement illustrated in Figure 10 is used to reproduce the right-channel analogue audio signal, the foregoing operation nevertheless is carried out to supply a reconstructed right-channel signal to the output terminal.

Figure 11 illustrates a simple representation of the manner in which bulk-type magnetic heads which normally are used to reproduce digital audio signals can be used to recover a left-channel (or right-channel) analogue audio signal. Assuming that the head 2A is longitudinally displaced relative to the heads 1A and 3A, thus reproducing a sub-channel of the analogue audio signal having a relative time advance τ, this sub-channel is supplied to an analogue delay circuit 301 which has a compensating time delay τ. Hence, all of the analogue sub-channels are now in time coincidence and may be summed by a summing circuit 300 to recover the original left-channel (or right-channel) audio signal. The recovered signal is supplied to an output terminal 302 for further utilization. In this illustration, the summing circuit 300 comprises an analogue adder.

## Claims

1. Apparatus for reproducing either M channels of digital audio signals recorded in longitudinal tracks on a record medium or an analogue audio signal recorded in one longitudinal track on a record medium, the apparatus comprising:
a plurality of heads (1A...) for reproducing the M channels of digital audio signals or for reproducing the analogue audio signal;
multiplexer means (3) coupled to said plurality of heads (1A...) for multiplexing the digital or analogue audio signals reproduced by said heads (1A...);
analogue-to-digital converter (ADC) means (4) coupled to said multiplexer means (3) for digitizing the multiplexed audio signals;
waveform equalizer means (5) coupled to said ADC means (4) for waveform equalizing a digitized audio signal recovered from said digital audio signals;
processing means (5,14) for summing the digitized audio signals produced by said ADC means (4) when said plurality of heads (1A...) reproduces an analogue audio signal;
digital handling means (30) coupled to said waveform equalizer means (5) for digitally processing the waveform equalized digitized audio signal;
digital filter means (15) coupled to receive the summed digitized audio signals from said processing means (5,14) when said plurality of heads (1) reproduce an analogue audio signal and to receive the digitally processed audio signals from said digital handling means (30) when said plurality of heads (1A...) reproduce a digital audio signal; and
digital-to-analogue converter means (16) coupled to said digital filter means (15) for producing an analogue audio signal in response to digital signals supplied thereto by said digital filter means (15).

2. Apparatus according to claim 1 wherein said plurality of heads (1A...) comprise a plurality of magnetoresistive heads (1A...).

3. Apparatus according to claim 2 wherein said plurality of magnetoresistive heads (1A...) are aligned transversely to said longitudinal track.

4. Apparatus according to claim 2 wherein said processing means (5) is included in said waveform equalizer means (5) and comprises synchronous detecting means (5f) for detecting the digitized audio signals recovered from said analogue audio signal, and summing means (5h) coupled to said synchronous detecting means (5f) for summing a predetermined number of successive digitized audio signals produced by said ADC means (4).

5. Apparatus according to claim 4 further comprising AC bias clock generator means (20) coupled to said magnetoresistive heads (1A...) for supplying an AC bias clock signal thereto when an analogue audio signal is reproduced; and wherein said synchronous detecting means (5f) comprises multiplier means (5f) coupled to said ADC means (4) and said AC bias clock generator means (20) for multiplying the digitized audio signals with said AC bias clock signal when analogue audio signals are reproduced.

6. Apparatus according to claim 5 wherein said ADC means (4) includes a source of timing pulses of frequency Fₛ and said AC bias clock signal comprises clock pulses of frequency Fₛ/M having a duty cycle of 50%.

7. Apparatus according to claim 5 wherein said analogue audio signal comprises a left-channel signal recorded in one track and further comprises a right-channel signal recorded in a second track, said multiplexer means (3) multiplexing the left-channel and right-channel signals reproduced by said plurality of heads (1A...); and wherein said ADC means (4) includes a source of timing pulses of frequency Fₛ and said AC bias clock signal comprises clock pulses of frequency Fₛ/2M having a duty cycle of 50%.

8. Apparatus according to claim 4 wherein said summing means (5h) comprises an adder (5h) and an accumulator (5i) connected such that the contents of said accumulator (5i) are summed in said adder (5h) with a digitized audio signal and the summed signals are loaded into said accumulator (5i) to be summed with the digitized audio signal next produced by said ADC means (4).

9. Apparatus according to claim 1 wherein M heads (1A...) reproduce said M channels of digital audio signals and N heads (2≤N≤M) reproduce said audio signal.

10. Apparatus according to claim 1 wherein at least one of said plurality of heads (1A...) is displaced relative to the other heads (1A...) in a longitudinal direction such that a relative time shift τ is imparted between the signals reproduced by the displaced heads (1A...) and the signals reproduced by the other heads (1A...).

11. Apparatus according to claim 10 wherein said processing means (5) includes delay means (5a) for selectively delaying by a predetermined amount the digitized audio signals recovered from the analogue audio signals reproduced by the displaced heads (1A...).

12. Apparatus according to claim 11 wherein said delay means (5a) imparts a time delay τ to the digitized audio signals.

13. Apparatus according to claim 12 wherein said processing means (5) comprises storage means (5i) for storing digitized multiplexed audio signals produced by said ADC means (4) at a plurality of sampling intervals k, (k-1), (k-2), ... (k-1-n) ...; and accumulator means (5i) for accumulating the sum of the digitized audio signals recovered from said other heads (1A...) at the (k-1) sampling interval and the digitized audio signals recovered from said displaced heads (1a...) at the (k-1-n) sampling interval.

14. Apparatus according to claim 13 wherein n is a function of said delay τ and said sampling interval.

15. Apparatus for reproducing either M channels of digital audio signals recorded in longitudinal tracks on a record medium or an analogue audio signal recorded in one longitudinal track on a record medium, the apparatus comprising:
a plurality of heads (1A...) for reproducing the M channels of digital audio signals or the analogue audio signal, with at least one of said heads (1A...) being displaced relative to the other heads (1A...) in a longitudinal direction such that a relative time shift τ is imparted between the audio signal reproduced by the displaced heads (1A...) and the audio signals reproduced by the other heads (1A...);
delay means (102...) for delaying the audio signals reproduced by the displaced heads (1A...) relative to the audio signals reproduced by the other heads (1A...) to minimize said time shift τ ; and
summing means (107) for summing the audio signals reproduced by said other heads (1A...) and the delayed audio signals to recover the analogue audio signal recorded in said one track.

16. Apparatus according to claim 15 further comprising multiplexer means (100) for multiplexing analogue audio signals reproduced by said displaced and other heads (1A...); and analogue-to-digital converter means (101) for digitizing the multiplexed analogue audio signals to supply said delay means (102...) with successive samples of the digitized audio signals.

17. Apparatus according to claim 16 wherein said delay means (102...) comprises a plurality of delay channels (102, 103, 104), each including at least one clocked latch circuit for storing a respective sample of the digitized, multiplexed analogue audio signals.

18. Apparatus according to claim 17 wherein those delay channels (102...) which store samples from the displaced heads (1A...) further include shift means (108) for shifting the samples supplied thereto by an amount equal to τ.

19. Apparatus according to claim 18 wherein those delay channels (102...) which store samples from the other heads (1A...) further include retiming means for selectively retiming said samples from the other heads (1A...) such that respective samples from said other heads (1A...) are brought into time coincidence.

20. Apparatus according to claim 19 wherein said summing means (107) comprises digital adding means (107) coupled to said plurality of delay channels (102...) for adding the time coincident samples produced thereby.

21. Apparatus according to claim 20 further comprising digital-to-analogue converter means (110) coupled to said digital adding means (107) for converting the added samples to analogue form.

22. Apparatus according to any one of claims 1 to 14 for reproducing either M channels of digital audio signals recorded in longitudinal tracks on a record medium or left-channel (L) and right-channel (R) analogue audio signals recorded in respective longitudinal tracks on a record medium, wherein:
M magnetoresistive heads (1A...) are provided for reproducing the M channels of digital audio signals, N of said magnetoresistive heads (1A...) (N≤M) reproducing the L and R analogue audio signals;
said multiplexer means (3) is coupled to said M heads (1A...) for multiplexing the M channels of digital audio signals or N channels of L and R analogue audio signals;
said analogue-to-digital converter (ADC) means (4) is coupled to said multiplexer means (3) for producing digitized samples of the M multiplexed channels of digital audio signals or the N multiplexed channels of L and R analogue audio signals;
said waveform equalizer means (5) is coupled to said ADC means (4) and includes summing means (5h) normally operable to equalize digitized waveform samples recovered from said digital audio signals and selectively operable to sum N/2 digitized samples of L analogue audio signals and to sum N/2 digitized samples of R analogue audio signals; a data detecting means (6) is coupled to said waveform equalizer means for producing M data channels of digital audio signals;
a digital signal processing means (14) is coupled to said data detecting means (6) when said heads (1A...) reproduce digital audio signals for demodulating said M data channels of digital audio signals, said digital signal processing means (14) being coupled to said summing means (5h) when said heads reproduce analogue audio signals for providing summed L signals and summed R signals; and
said digital-to-analogue converter (DAC) means (16) is coupled to said digital processing means (14) to convert to analogue form the digitized signals supplied thereto.

23. Apparatus according to claim 22 wherein said waveform equalizer means (5) further includes multiplying means (5f) normally operable to multiply the digitized samples recovered from said digital audio signals by selected predetermined coefficients to synchronously detect the digitized samples recovered from said analogue audio signals.

24. Apparatus according to claim 23 further comprising AC bias clock generator means (20) coupled to said magnetoresistive heads (1A...) for supplying an AC bias clock signal thereto when an analogue audio signal is reproduced and for supplying said AC bias clock signal to said multiplying means (5f) for synchronously detecting the digitized samples recovered from said analogue audio signals.

25. Apparatus according to claim 24 wherein said summing means (5h) comprises an adder (5h) coupled to receive signals produced by said multiplying means (5f), an accumulator (5i) for receiving signals produced by said adder (5h), and feedback means for feeding back to said adder (5h) signals accumulated in said accumulator (5i); whereby when said heads (1A...) reproduce analogue audio signals, a digitized sample produced by said ADC means (4) is summed with the signals accumulated in said accumulator means (5i) and the summed signals are loaded into said accumulator means (5i) to be summed with the next digitized sample produced by said ADC means (4).

26. Apparatus of claim 25 further comprising means for clearing said accumulator means (5i) after the sum of the (N/2)th digitized sample produced by said ADC means (4) and the signals accumulated in said accumulator means (5i) are loaded into said accumulator means (5i).

27. Apparatus according to any one of claims 1 to 14 for reproducing either M channels of digital audio signals recorded in longitudinal tracks on a record medium or left-channel (L) and right-channel (R) analogue audio signals recorded in respective longitudinal tracks on a record medium, wherein:
M heads (1A...) are provided for reproducing the M channels of digital audio signal, N of said M heads (1A...) (N≤M) reproducing the L and R analogue audio signals and at least one of said N heads (1A...) being displaced relative to the other heads (1A...) in a longitudinal direction such that a relative time shift τ is imparted between the audio signals reproduced by the displaced heads (1A...) and the audio signals reproduced by said other heads (1A...);
said multiplexer means (3) is coupled to said M heads (1A...) for multiplexing the M channels of digital audio signal or N channels of L and R analogue audio signal;
said analogue-to-digital converter (ADC) means (4) is coupled to said multiplexer means (3) for producing digitized samples of the M multiplexed channels of digitized audio signals or of the N multiplexed channels of L and R analogue audio signals;
said processing means (5,14) coupled to said ADC means (4) and normally operative to process the digitized samples of said M multiplexed channels for producing M data channels of digital audio signals;
a digital signal processing means (14) is coupled to said processing means (5,14) when said heads (1A...) reproduce digital audio signals for demodulating said M data channels of digital audio signals, said digital signal processing means (14) including delay and summing means coupled to said ADC means (4) when said heads (1A...) reproduce analogue audio signals for delaying selected ones of N/2 digitized samples of the L analogue audio signal reproduced by the displaced heads (1A...) and for delaying selected ones of N/2 digitized samples of the R analogue audio signal reproduced by the displaced heads substantially to eliminate said time shift τ, and for summing the delayed and undelayed digitized samples of the L analogue audio signal and for summing the delayed and undelayed digitized samples of R analogue audio signal; and
said digital-to analogue converter (DAC) means (16) is coupled to said digital signal processing means (14) to convert to analogue form the summed digitized samples produced by said digital signal processing means (14).

28. Apparatus according to claim 27 wherein said delay and summing means comprises storage means for storing digitized samples produced from said N heads (1A...) a plurality of sampling intervals k, (k-1), (k-2), ... (k-1-n), ...; and accumulator means for accumulating the sum of the digitized samples produced from said other heads at the (k-1) sampling interval and the digitized samples produced by said displaced heads (1A...) at the (k-1-n) sampling interval; where n is a function of said delay τ and said sampling interval.

## Patentansprüche

1. Gerät zur Wiedergabe von entweder M Kanälen mit digitalen Audiosignalen, die in Längsspuren auf einem Aufzeichnungsmedium aufgezeichnet sind, oder eines analogen Audiosignals, das in einer Längsspur auf einem Aufzeichnungsmedium aufgezeichnet ist,
mit einer Mehrzahl von Köpfen (1A...) für die Wiedergabe der M Kanäle mit digitalen Audiosignalen oder zur Wiedergabe des analogen Audiosignals,
mit einer mit der Mehrzahl von Köpfen (1A...) verbundenen Multiplexereinrichtung (3) zur Multiplexverknüpfung der von den Köpfen (1A...) wiedergegebenen digitalen oder analogen Audiosignale,
mit einer mit der Multiplexereinrichtung (3) verbundenen Analog/Digital-Wandlereinrichtung (4) zur Digitalisierung der multiplexverknüpften Audiosignale,
mit einer mit der Analog/Digital-Wandlereinrichtung (4) verbundenen Wellenform-Entzerrereinrichtung (5) zum Entzerren der Wellenform eines aus den digitalen Audiosignalen gewonnenen digitalisierten Audiosignals,
mit einer Verarbeitungseinrichtung (5, 14) zum Summieren der von der Analog/Digital-Wandlereinrichtung (4) erzeugten digitalisierten Audiosignale, wenn von der Mehrzahl von Köpfen (1A...) ein analoges Audiosignal wiedergegeben wird,
mit einer mit der Wellenform-Entzerrereinrichtung (5) verbundenen digitalen Behandlungseinrichtung (30) zur digitalen Verarbeitung des digitalisierten Audiosignals mit entzerrter Wellenform,
mit einer digitalen Filtereinrichtung (15), die so angeordnet ist, daß sie die summierten digitalisierten Audiosignale aus der Verarbeitungseinrichtung (5, 14) aufnimmt, wenn von der Mehrzahl von Köpfen (1A...) ein analoges Audiosignal wiedergegeben wird, und daß sie die digital verarbeiteten Audiosignale aus der digitalen Behandlungseinrichtung (30) aufnimmt, wenn von der Mehrzahl von Köpfen (1A...) ein digitales Audiosignal wiedergegeben wird, und
mit einer mit der digitalen Filtereinrichtung (15) verbundenen Digital/Analog-Wandlereinrichtung (16) zur Erzeugung eines analogen Audiosignals nach Maßgabe der ihr von der digitalen Filtereinrichtung (15) zugeführten digitalen Signale.

2. Gerät nach Anspruch 1, bei dem die Mehrzahl von Köpfen (1A...) eine Mehrzahl von magnetoresistiven Köpfen (1A...) umfaßt.

3. Gerät nach Anspruch 2, bei dem die Mehrzahl von magnetoresistiven Köpfen (1A...) quer zu der genannten Längsspur fluchtend ausgerichtet ist.

4. Gerät nach Anspruch 2. bei dem die Verarbeitungseinrichtung (5) in der Wellenform-Entzerrereinrichtung (5) enthalten ist und eine Synchrondetektoreinrichtung (5f) zur Detektierung der aus dem analogen Audiosignal gewonnenen digitalisierten Audiosignale aufweist sowie eine mit der Synchrondetektoreinrichtung (5f) verbundene Summiereinrichtung (5h) zur Summierung einer vorbestimmten Anzahl von aufeinanderfolgenden digitalisierten Audiosignalen, die von der Analog/Digital-Wandlereinrichtung (4) erzeugt werden.

5. Gerät nach Anspruch 4, bei dem ferner eine mit den magnetoresistiven Köpfen (1A...) verbundene Wechselstrom-Vormagnetisierungs-Taktgeneratoreinrichtung (20) vorgesehen ist, die ihnen ein Wechselstrom-Vormagnetisierungs-Taktsignal zuführt, wenn ein analoges Audiosignal wiedergegeben wird, und bei dem die Synchrondetektoreinrichtung (5f) ein mit der Analog/Digital-Wandlereinrichtung (4) und der Wechselstrom-Vormagnetisierungs-Taktgeneratoreinrichtung (20) verbundene Multipliziereinrichtung (5f) aufweist, die die digitalisierten Audiosignale mit dem Wechselstrom-Vormagnetisierungs-Taktsignal multipliziert, wenn analoge Audiosignale wiedergegeben werden.

6. Gerät nach Anspruch 5, bei dem die Analog/Digital-Wandlereinrichtung (4) eine Quelle für Zeitimpulse der Frequenz Fₛ aufweist und bei dem das Wechselstrom-Vormagnetisierungs-Taktsignal Taktimpulse der Frequenz Fₛ/M mit einem Impuls-Pausen-Verhältnis von 50% enthält.

7. Gerät nach Anspruch 5, bei dem das analoge Audiosignal ein in einer Spur aufgezeichnetes linkes Kanalsignal (L-Audiosignal) und ein in einer zweiten Spur aufgezeichnetes rechtes Kanalsignal (R-Audiosignal) umfaßt, die Multiplexereinrichtung (3) das linke und das rechte Kanalsignal, die von den Mehrzahl von Köpfen (1A...) wiedergegeben werden, einer Multiplexverknüpfung unterzieht, und bei dem die Analog/Digital-Wandlereinrichtung (4) eine Quelle für Zeitimpulse der Frequenz Fₛ und das Wechselstrom-Vormagnetisierungs-Taktsignal Taktimpulse der Frequenz Fs/2M mit einem Impuls-Pausen-Verhältnis von 50% enthält.

8. Gerät nach Anspruch 4, bei dem die Summiereinrichtung (5h) einen Addierer (5h) und einen Akkumulator (5i) aufweist, die so miteinander verbunden sind, daß die Inhalte des Akkumulators (5i) in dem Addierer (5h) mit einem digitalisierten Audiosignal summiert werden und die summierten Signale in den Akkumulator (5i) geladen werden, um mit dem digitalisierten Audiosignal summiert zu werden, das als nächstes von der Analog/Digital-Wandlereinrichtung (4) erzeugt wird.

9. Gerät nach Anspruch 1, bei die genannten M Kanäle mit digitalen Audiosignalen von M Köpfen (1A...) wiedergegeben werden und das analoge Audiosignal von N Köpfen (2≤N≤M) wiedergegeben wird.

10. Gerät nach Anspruch 1, bei dem wenigstens einer aus der Mehrzahl von Köpfen (1A...) gegenüber den anderen Köpfen (1A...) in Längsrichtung versetzt ist, so daß zwischen den von den versetzten Köpfen (1A...) wiedergegebenen Signalen und den von den anderen Köpfen (1A...) wiedergegebenen Signalen eine relative Zeitverschiebung τ auftritt.

11. Gerät nach Anspruch 10, bei dem die Verarbeitungseinrichtung (5) eine Verzögerungseinrichtung (5a) enthält zur selektiven Verzögerung der aus den von den versetzten Köpfen (1A...) wiedergegebenen Audiosignalen gewonnenen digitalisierten Audiosignalen um einen vorbestimmten Betrag.

12. Gerät nach Anspruch 11, bei dem die Verzögerungseinrichtung (5a) die digitalisierten Audiosignalen mit einer Zeitverzögerung τ beaufschlagt.

13. Gerät nach Anspruch 12, bei dem die Verarbeitungseinrichtung (5) eine Speichereinrichtung (5i) zur Speicherung digitalisierter multiplexverknüpfter Audiosignale aufweist, die von der Analog/Digital-Wandlereinrichtung (4) in einer Mehrzahl von Abtastintervallen k, (k-1), (k-2), ... (k-1-n), ... erzeugt werden, sowie eine Akkumulatoreinrichtung (5i) zum Akkumulieren der Summe der digitalisierten Audiosignale, die von den genannten anderen Köpfen (1A...) in dem (k-1)-ten Abtastintervall gewonnen werden und der digitalisierten Audiosignale, die von den versetzten Köpfen (1A...) in dem (k-1-n)-ten Abtastintervall gewonnen werden.

14. Gerät nach Anspruch 13, bei dem n eine Funktion der Verzögerung τ und des Abtastintervalls ist.

15. Gerät zur Wiedergabe von entweder M Kanälen digitaler Audiosignalen, die in Längsspuren auf einem Aufzeichnungsmedium aufgezeichnet sind, oder eines analogen Audiosignals, das in einer Längsspur auf einem Aufzeichnungsmedium aufgezeichnet ist,
mit einer Mehrzahl von Köpfen (1A...) zur Wiedergabe der M Kanäle mit digitalen Audiosignalen oder des analogen Audiosignals, wobei wenigstens einer der Köpfe (1A...) gegenüber den anderen Köpfen (1A...) in Längsrichtung so versetzt ist, daß zwischen dem von den versetzten Köpfen (1A...) wiedergegebenen Audiosignal und den von den anderen Köpfen (1A...) wiedergegebenen Audiosignalen eine relative Zeitverschiebung τ auftritt,
mit einer Verzögerungseinrichtung (102...) zum Verzögern der von den versetzten Köpfen (1A...) wiedergegebenen Audiosignale relativ zu den von den anderen Köpfen (1A...) wiedergegebenen Audiosignalen, um die genannte Zeitverschiebung τ zu minimieren und
mit einer Summiereinrichtung (107) zum Summieren der von den anderen Köpfen (1A...) wiedergegebenen Audiosignale und der verzögerten Audiosignale, um das in der genannten einen Spur analoge Audiosignal zu gewinnen.

16. Gerät nach Anspruch 15 mit einer Multiplexereinrichtung (100) zur Multiplexverknüpfung der von den versetzten Köpfen und den anderen Köpfen (1A...) wiedergegebenen analogen Audiosignale, und einer Analog/Digital-Wandlereinrichtung (101) zum Digitalisieren der multiplexverknüpften analogen Audiosignale, um der Verzögerungseinrichtung (102...) aufeinanderfolgende Abtastproben der digitalisierten Audiosignale zuzuführen.

17. Gerät nach Anspruch 16, bei dem die Verzögerungseinrichtung (102...) eine Mehrzahl von Verzögerungskanälen (102, 103, 104) umfaßt, von denen jede zumindest eine getaktete Verriegelungsschaltung zur Speicherung einer entsprechenden Abtastprobe der digitalisierten multiplexverknüpften analogen Audiosignale enthalten.

18. Gerät nach Anspruch 17, bei dem diejenigen Verzögerungskanäle (102...), die Abtastproben aus den versetzten Köpfen (1A...) speichern, ferner eine Verschiebungseinrichtung (108) zum Verschieben der ihnen zugeführten Abtastproben um einen Betrag τ umfassen.

19. Gerät nach Anspruch 18, bei dem die diejenigen Verzögerungskanäle (102...), die Abtastproben aus den versetzten Köpfen (1A...) speichern, ferner eine Einrichtung zum selektiven zeitlichen Neuausrichten der Abtastproben aus den anderen Köpfen (1A...) umfassen, um die betreffenden Abtastproben aus den anderen Köpfen (1A...) in zeitliche Koinzidenz zu bringen.

20. Gerät nach Anspruch 19, bei dem die Summiereinrichtung (107) eine mit der Mehrzahl von Verzögerungskanälen (102...) verbundene digitale Addiereineinrichtung (107) zum Addieren der von ihnen erzeugten zeitlich koinzidenten Abtastproben aufweist.

21. Gerät nach Anspruch 20 mit einer mit der digitalen Addiereineinrichtung (107) verbundenen Digital/Analog-Wandlereinrichtung (110) zur Umwandlung der addierten Abtastproben in analoge Form.

22. Gerät nach einem der Ansprüche 1 bis 14 zur Wiedergabe von entweder M Kanälen mit digitalen Audiosignalen, die in Längsspuren auf einem Aufzeichnungsmedium aufgezeichnet sind, oder von linkskanaligen und rechtskanaligen analogen Audiosignalen (L-Audiosignal bzw. R-Audiosignal), die jeweils in Längsspuren auf einem Aufzeichnungsmedium aufgezeichnet sind, wobei
M magnetoresistive Köpfe (1A...) zur Wiedergabe der M Kanäle mit digitalen Audiosignalen, und N dieser magnetoresistiven Köpfe (1A...) (N≤M) zur Wiedergabe der analogen L- und R-Audiosignale vorgesehen sind,
die Multiplexereinrichtung (3) mit den M Köpfen (1A...) verbunden ist, um die M Kanäle mit digitalen Audiosignalen oder die N Kanäle mit analogen L- und R-Audiosignalen einer Multiplexverknüpfung zu unterziehen,
die Analog/Digital-Wandlereinrichtung (4) mit der Multiplexereinrichtung (3) verbunden ist, um digitalisierte Abtastproben der M multiplexverknüpften Kanäle mit digitalen Audiosignalen oder der N multiplexverknüpften Kanäle mit analogen L- und R-Audiosignalen zu erzeugen,
die Wellenform-Entzerrereinrichtung (5) mit der Analog/Digital-Wandlereinrichtung (4) verbunden ist und eine Summiereinrichtung (5h) aufweist, die normalerweise so betreibbar ist, daß sie die aus den digitalen Audiosignalen gewonnenen digitalisierten Wellenform-Abtastproben entzerrt und die wahlweise so betreibbar ist, daß sie N/2 digitalisierte Abtastproben von analogen L-Audiosignalen summiert und N/2 digitalisierte Abtastproben von analogen R-Audiosignalen summiert,
eine Datendetektoreinrichtung (6) mit der Wellenform-Entzerrereinrichtung (5) verbunden ist, um M Datenkanäle mit digitalen Audiosignalen zu erzeugen,
eine digitale Signalverarbeitungseinrichtung (14) mit der Datendetektoreinrichtung (6) verbunden ist, wenn die Köpfe (1A...) digitale Audiosignale wiedergeben, um die M Datenkanäle mit digitalen Audiosignalen zu demodulieren, und die digitale Signalverarbeitungseinrichtung (14) mit der Summiereinrichtung (5h) verbunden ist, wenn die Köpfe analoge Audiosignale wiedergeben, um summierte L-Signale und summierte R-Signale zu liefern, und
die digitale Digital/Analog-Wandlereinrichtung (16) mit der digitalen Signalverarbeitungseinrichtung (14) verbunden ist, um die dieser zugeführten digitalisierten Signale in analoge Form umzuwandeln.

23. Gerät nach Anspruch 22, bei dem die Wellenform-Entzerrereinrichtung (5) ferner eine Multipliziereinrichtung (5f) aufweist, die normalerweise so betreibbar ist, daß sie die aus den digitalen Audiosignalen gewonnenen digitalisierten Abtastproben mit ausgewählten Koeffizienten multipliziert, um die aus den analogen Audiosignalen gewonnenen digitalisierten Abtastproben synchron zu detektieren.

24. Gerät nach Anspruch 23, bei dem ferner eine mit den magnetoresistiven Köpfen (1A...) verbundene Wechselstrom-Vormagnetisierungs-Taktgeneratoreinrichtung (20) vorgesehen ist, die ihnen ein Wechselstrom-Vormagnetisierungs-Taktsignal zuführt, wenn ein analoges Audiosignal wiedergegeben wird, und die das Wechselstrom-Vormagnetisierungs-Taktsignal der Multipliziereinrichtung (5f) zur Synchrondetektierung der aus den analogen Audiosignalen gewonnenen digitalisierten Abtastproben zuführen.

25. Gerät nach Anspruch 24, bei dem die Summiereinrichtung (5h) aufweist: einen Addierer (5h), der die von der Multipliziereinrichtung (5f) erzeugten Signale aufnimmt, eine Akkumulatoreinrichtung (5i), die die von dem Addierer (5h) erzeugten Signale aufnimmt, und eine Rückkopplungseinrichtung zum Rückkoppeln der in der Akkumulatoreinrichtung (5i) akkumulierten Signale zu dem Addierer (5h), so daß dann, wenn die Köpfe (1A...) analoge Audiosignale wiedergeben, eine von der Analog/Digital-Wandlereinrichtung (4) erzeugte digitalisierte Abtastprobe zu den in der Akkumulatoreinrichtung (5i) akkumulierten Signalen summiert wird und die summierten Signale in die Akkumulatoreinrichtung (5i) geladen werden, um zu der nächsten von der Analog/Digital-Wandlereinrichtung (4) erzeugten digitalisierten Abtastprobe summiert zu werden.

26. Gerät nach Anspruch 25 mit Mitteln zum Nullstellen des Akkumulators (5i), nachdem die Summe der von den Analog/Digital-Wandlereinrichtung (4) erzeugten (N/2)-ten digitalisierten Abtastprobe und der in der Akkumulatoreinrichtung (5i) akkumulierten Signale in den Akkumulator (5i) geladen sind.

27. Gerät nach einem der Ansprüche 1 bis 14 zur Wiedergabe von entweder M Kanälen digitaler Audiosignalen, die in Längsspuren auf einem Aufzeichnungsmedium aufgezeichnet sind, oder von analogen linkskanaligen und rechtskanaligen Audiosignalen (L-Audiosignal bzw. R-Audiosignal), die jeweils in Längsspuren auf einem Aufzeichnungsmedium aufgezeichnet sind, wobei
M Köpfe (1A...) vorgesehen sind zur Wiedergabe der M Kanäle mit digitalen Audiosignalen, und N dieser M Köpfe (1A...) (N≤M) die analogen L- und R-Audiosignale wiedergeben, wobei wenigstens einer der N Köpfe (1A...) gegenüber den anderen Köpfen (1A...) in Längsrichtung versetzt ist, so daß zwischen den von den versetzten Köpfen (1A...) wiedergegebenen Signalen und den von den anderen Köpfen (1A...) wiedergegebenen Signalen eine relative Zeitverschiebung τ auftritt,
die Multiplexereinrichtung (3) mit den M Köpfen (1A...) verbunden ist, um die M Kanäle mit digitalen Audiosignalen oder die N Kanäle mit analogen L- und R-Audiosignalen einer Multiplexverknüpfung zu unterziehen,
die Analog/Digital-Wandlereinrichtung (4) mit der Multiplexereinrichtung (3) verbunden ist, um digitalisierte Abtastproben der M multiplexverknüpften Kanäle mit digitalisierten Audiosignalen oder der N multiplexverknüpften Kanäle mit analogen L- und R-Audiosignalen zu erzeugen,
die Verarbeitungseinrichtung (5, 14) mit der Analog/Digital-Wandlereinrichtung (4) verbunden ist und normalerweise die digitalisierten Abtastproben der M multiplexverknüpften Kanäle verarbeitet, um M Datenkanäle mir digitalen Audiosignalen zu erzeugen,
eine digitale Signalverarbeitungseinrichtung (14) mit der Verarbeitungseinrichtung (5, 14) verbunden ist, wenn die Köpfe (1A...) digitale Audiosignal wiedergeben, um die M Datenkanäle mit digitalen Audiosignalen zu demodulieren, wobei die digitale Signalverarbeitungseinrichtung (14) eine Verzögerungs- und Summiereinrichtung aufweist, die bei der Wiedergabe analoger Audiosignale durch die Köpfe (1A...) mit der Analog/Digital-Wandlereinrichtung (4) verbunden ist, um ausgewählte Exemplare von N/2 digitalisierten Abtastproben des von den versetzten Köpfen (1A...) wiedergegebenen analogen L-Audiosignals und ausgewählte Exemplare von N/2 digitalisierten Abtastproben des von den versetzten Köpfen (1A...) wiedergegebenen analogen R-Audiosignals zu verzögern und dadurch die genannte Zeitverzögerung τ im wesentlichen zu eliminieren, und um die verzögerten und die unverzögerten Abtastproben des analogen L-Audiosignals zu summieren und die verzögerten und die unverzögerten Abtastproben des analogen R-Audiosignals zu summieren,
und die Digital/Analog-Wandlereinrichtung (16) mit der digitalen Signalverarbeitungseinrichtung (14) verbunden ist, um die von der digitalen Signalverarbeitungseinrichtung (14) erzeugten summierten digitalisierten Abtastproben in analoge Form umzuwandeln.

28. Gerät nach Anspruch 27, bei dem die Verzögerungs- und Summiereinrichtung eine Speichereinrichtung zur Speicherung digitalisierter Abtastwerte aufweist, die von den N Köpfen (1A...) in mehreren Abtastintervallen k, (k-1), (k-2), ... ..(k-1-n), ... erzeugt werden, sowie eine Akkumulatoreinrichtung zum Akkumulieren der Summe der digitalisierten Audiosignale, die von den genannten anderen Köpfen (1A...) in dem (k-1)-ten Abtastintervall gewonnen werden und der digitalisierten Abtastproben, die von den versetzten Köpfen (1A...) in dem (k-1-n)-ten Abtastintervall gewonnen werden, wobei n eine Funktion der Verzögerung τ und des Abtastintervalls ist.

## Revendications

1. Appareil pour reproduire soit M canaux de signaux audio numériques enregistrés sur des pistes longitudinales sur un support d'enregistrement soit un signal audio analogique enregistré sur une piste longitudinale sur un support d'enregistrement, l'appareil comprenant :
une pluralité de têtes (1A...) pour reproduire les M canaux de signaux audio numériques ou pour reproduire le signal audio analogique ;
un moyen de multiplexeur (3) couplé à ladite pluralité de têtes (1A...) pour multiplexer les signaux numériques ou audio analogique reproduits par lesdites têtes (1A...) ;
un moyen de convertisseur analogique-numérique (CAN) (4) couplé audit moyen de multiplexeur (3) pour numériser les signaux audio multiplexés;
un moyen d'égaliseur de forme d'onde (5) couplé audit moyen CAN (4) pour égaliser une forme d'onde d'un signal audio numérisé restauré à partir desdits signaux audio numériques ;
un moyen de traitement (5, 14) pour sommer les signaux audio numérisés produits par ledit moyen CAN (4) lorsque ladite pluralité de têtes (1A...) reproduit un signal audio analogique ;
un moyen de manipulation numérique (30) couplé audit moyen d'égaliseur de forme d'onde (5) pour traiter numériquement le signal audio numérisé égalisé de forme d'onde ;
un moyen de filtre numérique (15) couplé pour recevoir les signaux audio numérisés sommés provenant dudit moyen de traitement (5, 14) lorsque ladite pluralité de têtes (1) reproduisent un signal audio analogique et pour recevoir les signaux audio traités numériquement depuis ledit moyen de manipulation numérique (30) lorsque ladite pluralité de têtes (1A...) reproduisent un signal audio numérique ; et
un moyen de convertisseur numérique-analogique (16) couplé audit moyen de filtre numérique (15) pour produire un signal audio analogique en réponse à des signaux numériques qui lui sont appliqués par ledit moyen de filtre numérique (15).

2. Appareil selon la revendication 1, dans lequel ladite pluralité de têtes (1A...) comprend une pluralité de têtes magnétorésistives (1A...).

3. Appareil selon la revendication 2, dans lequel ladite pluralité de têtes magnétorésistives (1A...) sont alignées transversalement à ladite piste longitudinale.

4. Appareil selon la revendication 2, dans lequel ledit moyen de traitement (5) est inclus dans ledit moyen d'égaliseur de forme d'onde (5) et il comprend un moyen de détection synchrone (5f) pour détecter les signaux audio numérisés restaurés à partir dudit signal audio analogique et un moyen de sommation (5h) couplé audit moyen de détection synchrone (5f) pour sommer un nombre prédéterminé de signaux audio numérisés successifs produits par ledit moyen CAN (4).

5. Appareil selon la revendication 4, comprenant en outre un moyen de générateur d'horloge de polarisation courant alternatif (20) couplé auxdites têtes magnétorésistives (1A...) pour leur appliquer un signal d'horloge de polarisation courant alternatif lorsqu'un signal audio analogique est reproduit; et dans lequel ledit moyen de détection synchrone (5f) comprend un moyen de multiplieur (5f) couplé audit moyen CAN (4) et audit moyen de générateur d'horloge de polarisation courant alternatif (20) pour multiplier les signaux audio numérisés avec ledit signal d'horloge de polarisation courant alternatif lorsque des signaux audio analogiques sont reproduits.

6. Appareil selon la revendication 5, dans lequel ledit moyen CAN (4) inclut une source d'impulsions de cadencement de fréquence Fₛ et ledit signal d'horloge de polarisation courant alternatif comprend des impulsions d'horloge de fréquence Fₛ/M présentant un rapport cyclique de 50%.

7. Appareil selon la revendication 5, dans lequel ledit signal audio analogique comprend un signal de canal gauche enregistré sur une piste et comprend en outre un signal de canal droit enregistré sur une seconde piste, ledit moyen de multiplexeur (3) multiplexant les signaux de canal gauche et de canal droit reproduits par ladite pluralité de têtes (1A...) ; et dans lequel ledit moyen CAN (4) inclut une source d'impulsions de cadencement de fréquence Fₛ et ledit signal d'horloge de polarisation courant alternatif comprend des impulsions d'horloge de fréquence Fₛ/2M présentant un rapport cyclique de 50%.

8. Appareil selon la revendication 4, dans lequel ledit moyen de sommation (5h) comprend un additionneur (5h) et un accumulateur (5i) connectés de telle sorte que le contenu dudit accumulateur (5i) soit sommé dans ledit additionneur (5h) avec un signal audio numérisé et que les signaux sommés soient chargés dans ledit accumulateur (5i) pour être sommés avec le signal audio numérisé produit ensuite par ledit moyen CAN (4).

9. Appareil selon la revendication 1, dans lequel M têtes (1A...) reproduisent lesdits M canaux de signaux audio numériques et N têtes (2≤N≤M) reproduisent ledit signal audio.

10. Appareil selon la revendication 1, dans lequel au moins l'une de ladite pluralité de têtes (1A...) est déplacée par rapport aux autres têtes (1A...) suivant une direction longitudinale de telle sorte qu'un décalage temporel relatif τ soit imprimé entre les signaux reproduits par les têtes déplacées (1A...) et les signaux reproduits par les autres têtes (1A...).

11. Appareil selon la revendication 10, dans lequel ledit moyen de traitement (5) inclut un moyen de retard (5a) pour retarder sélectivement d'une valeur prédéterminée les signaux audio numérisés restaurés à partir des signaux audio analogiques reproduits par les têtes déplacées (1A...).

12. Appareil selon la revendication 11, dans lequel ledit moyen de retard (5a) imprime un retard temporel τ aux signaux audio numérisés.

13. Appareil selon la revendication 12, dans lequel ledit moyen de traitement (5) comprend un moyen de stockage (5i) pour stocker des signaux audio multiplexés numérisés produits par ledit moyen CAN (4) selon une pluralité d'intervalles d'échantillonnage k, (k-1), (k-2), ..., (k-1-n), ... ; et un moyen d'accumulateur (5i) pour accumuler la somme des signaux audio numérisés restaurés à partir desdites autres têtes (1A...) lors du (k-1)-ième intervalle d'échantillonnage et des signaux audio numérisés restaurés à partir desdites têtes déplacées (1A...) lors du (k-1-n)-ième intervalle d'échantillonnage.

14. Appareil selon la revendication 13, dans lequel n est une fonction dudit retard τ et dudit intervalle d'échantillonnage.

15. Appareil pour reproduire soit M canaux de signaux audio numériques enregistrés sur des pistes longitudinales sur un support d'enregistrement soit un signal audio analogique enregistré sur une piste longitudinale sur un support d'enregistrement, l'appareil comprenant:
une pluralité de têtes (1A...) pour reproduire les M canaux de signaux audio numériques ou le signal audio analogique, au moins l'une desdites têtes (1A...) étant déplacée par rapport aux autres têtes (1A...) suivant une direction longitudinale de telle sorte qu'un décalage temporel relatif τ soit imprimé entre le signal audio reproduit par les têtes déplacées (1A...) et les signaux audio reproduits par les autres têtes (1A...) ;
un moyen de retard (102...) pour retarder les signaux audio reproduits par les têtes déplacées (1A...) par rapport aux signaux audio reproduits par les autres têtes (1A...) afin de minimiser ledit décalage temporel τ ; et
un moyen de sommation (107) pour sommer les signaux audio reproduits par lesdites autres têtes (1A...) et les signaux audio retardés pour restaurer le signal audio analogique enregistré sur ladite une piste.

16. Appareil selon la revendication 15, comprenant en outre un moyen de multiplexeur (100) pour multiplexer les signaux audio analogiques reproduits par lesdites têtes déplacées et par lesdites autres têtes (1A...) ; et un moyen de convertisseur analogique-numérique (101) pour numériser les signaux audio analogiques multiplexés afin d'appliquer audit moyen de retard (102...) des échantillons successifs des signaux audio numérisés.

17. Appareil selon la revendication 16, dans lequel ledit moyen de retard (102...) comprend une pluralité de canaux de retard (102, 103, 104) dont chacun inclut au moins un circuit de verrouillage cadencé par horloge pour stocker un échantillon respectif des signaux audio analogiques numérisés multiplexés.

18. Appareil selon la revendication 17, dans lequel les canaux de retard (102...) qui stockent des échantillons provenant des têtes déplacées (1A...) incluent en outre un moyen de décalage (108) pour décaler les échantillons qui leur sont appliqués d'une valeur égale à τ.

19. Appareil selon la revendication 18, dans lequel les canaux de retard (102...) qui stockent des échantillons provenant des autres têtes (1A...) incluent en outre un moyen de recadencement pour recadencer sélectivement lesdits échantillons provenant des autres têtes (1A...) de telle sorte que des échantillons respectifs provenant desdites autres têtes (1A...) soient amenés en coïncidence temporelle.

20. Appareil selon la revendication 19, dans lequel ledit moyen de sommation (107) comprend un moyen d'addition numérique (107) couplé à ladite pluralité de canaux de retard (102...) pour additionner les échantillons en coïncidence temporelle ainsi produits.

21. Appareil selon la revendication 20, comprenant en outre un moyen de convertisseur numérique-analogique (110) couplé audit moyen d'addition numérique (107) pour convertir les échantillons additionnés selon une forme analogique.

22. Appareil selon l'une quelconque des revendications 1 à 14 pour reproduire soit M canaux de signaux audio numériques enregistrés sur des pistes longitudinales sur un support d'enregistrement soit des signaux audio analogiques de canal gauche (L) et de canal droit (R) enregistrés sur des pistes longitudinales respectives sur un support d'enregistrement, dans lequel :
M têtes magnétorésistives (1A...) sont prévues pour reproduire les M canaux de signaux audio numériques, N desdites têtes magnétorésistives (1A...) (N≤M) reproduisant les signaux audio analogiques L et R ;
ledit moyen de multiplexeur (3) est couplé auxdites M têtes (1A...) pour multiplexer les M canaux de signaux audio numériques ou les N canaux de signaux audio analogiques L et R;
ledit moyen de convertisseur analogique-numérique (CAN) (4) est couplé audit moyen de multiplexeur (3) pour produire des échantillons numérisés des M canaux multiplexés de signaux audio numériques ou des N canaux multiplexés de signaux audio analogiques L et R;
ledit moyen d'égaliseur de forme d'onde (5) est couplé audit moyen CAN (4) et il inclut un moyen de sommation (5h) activable normalement pour égaliser des échantillons de forme d'onde numérisés restaurés à partir desdits signaux audio numériques et activable sélectivement pour sommer N/2 échantillons numérisés de signaux audio analogiques L et pour sommer N/2 échantillons numérisés de signaux audio analogiques R ; un moyen de détection de données (6) est couplé audit moyen d'égaliseur de forme d'onde pour produire M canaux de données de signaux audio numériques ;
un moyen de traitement de signal numérique (14) est couplé audit moyen de détection de données (6) lorsque lesdites têtes (1A...) reproduisent des signaux audio numériques pour démoduler lesdits M canaux de données de signaux audio numériques, ledit moyen de traitement de signal numérique (14) étant couplé audit moyen de sommation (5h) lorsque lesdites têtes reproduisent des signaux audio analogiques pour produire des signaux L sommés et des signaux R sommés ; et
ledit moyen de convertisseur numérique-analogique (CAN) (16) est couplé audit moyen de traitement numérique (14) pour convertir selon une forme analogique les signaux numérisés qui lui sont appliqués.

23. Appareil selon la revendication 22, dans lequel ledit moyen d'égaliseur de forme d'onde (5) inclut en outre un moyen de multiplication (5f) activable normalement pour multiplier les échantillons numérisés restaurés à partir desdits signaux audio numériques par des coefficients prédéterminés sélectionnés pour détecter de façon synchrone les échantillons numérisés restaurés à partir desdits signaux audio analogiques.

24. Appareil selon la revendication 23, comprenant en outre un moyen de générateur d'horloge de polarisation courant continu (20) couplé auxdites têtes magnétorésistives (1A...) pour leur appliquer un signal d'horloge de polarisation courant alternatif lorsqu'un signal audio analogique est reproduit et pour appliquer ledit signal d'horloge de polarisation courant alternatif audit moyen de multiplication (5f) pour détecter de façon synchrone les échantillons numérisés restaurés à partir desdits signaux audio analogiques.

25. Appareil selon la revendication 24, dans lequel ledit moyen de sommation (5h) comprend un additionneur (5h) couplé pour recevoir des signaux produits par ledit moyen de multiplication (5f), un accumulateur (5i) pour recevoir des signaux produits par ledit additionneur (5h) et un moyen de retour pour appliquer en retour sur ledit additionneur (5h) des signaux accumulés dans ledit accumulateur (5i) ; de manière à ce que, lorsque lesdites têtes (1A...) reproduisent des signaux audio analogiques, un échantillon numérisé produit par ledit moyen CAN (4) soit sommé avec les signaux accumulés dans ledit moyen d'accumulateur (5i) et à ce que les signaux sommés soient chargés dans ledit moyen d'accumulateur (5i) pour être sommés avec l'échantillon numérisé suivant produit par ledit moyen CAN (4).

26. Appareil selon la revendication 25, comprenant en outre un moyen pour remettre à zéro ledit moyen d'accumulateur (5i) après que la somme du (N/2)-ième échantillon numérisé produit par ledit moyen CAN (4) et des signaux accumulés dans ledit moyen d'accumulateur (5i) est chargée dans ledit moyen d'accumulateur (5i).

27. Appareil selon l'une quelconque des revendications 1 à 14 pour reproduire soit M canaux de signaux audio numériques enregistrés sur des pistes longitudinales sur un support d'enregistrement soit des signaux audio analogiques de canal gauche (L) et de canal droit (R) enregistrés sur des pistes longitudinales respectives sur un support d'enregistrement, dans lequel :
M têtes (1A...) sont prévues pour reproduire les M canaux de signal audio numérique, N desdites M têtes (1A...) (N≤M) reproduisant les signaux audio analogiques L et R et au moins l'une desdites N têtes (1A...) étant déplacée par rapport aux autres têtes (1A...) suivant une direction longitudinale de telle sorte qu'un décalage temporel relatif τ soit imprimé entre les signaux audio reproduits par les têtes déplacées (1A...) et les signaux audio reproduits par lesdites autres têtes (1A...) ;
ledit moyen de multiplexeur (3) est couplé auxdites M têtes (1A...) pour multiplexer les M canaux de signal audio numérique ou les N canaux de signal audio analogique L et R;
ledit moyen de convertisseur analogique-numérique (CAN) (4) est couplé audit moyen de multiplexeur (3) pour produire des échantillons numérisés des M canaux multiplexés de signaux audio numérisés ou des N canaux multiplexés de signaux audio analogiques L et R;
ledit moyen de traitement (5, 14) couplé audit moyen CAN (4) et activable normalement pour traiter les échantillons numérisés desdits M canaux multiplexés pour produire M canaux de données de signaux audio numériques ;
un moyen de traitement de signal numérique (14) est couplé audit moyen de traitement (5, 14) lorsque lesdites têtes (1A...) reproduisent des signaux audio numériques pour démoduler lesdits M canaux de données de signaux audio numériques, ledit moyen de traitement de signal numérique (14) incluant un moyen de retard et de sommation couplé audit moyen CAN (4) lorsque lesdites têtes (1A...) reproduisent des signaux audio analogiques pour retarder certains sélectionnés de N/2 échantillons numérisés du signal audio analogique L reproduit par les têtes déplacées (1A...) et pour retarder certains sélectionnés de N/2 échantillons numérisés du signal audio analogique R reproduit par les têtes déplacées afin d'éliminer significativement ledit décalage temporel τ et pour sommer les échantillons numérisés retardés et non retardés du signal audio analogique L et pour sommer les échantillons numérisés retardés et non retardés du signal audio analogique R ; et
ledit moyen de convertisseur numérique-analogique (CAN) (16) est couplé audit moyen de traitement de signal numérique (14) pour convertir selon une forme analogique les échantillons numérisés sommés produits par ledit moyen de traitement de signal numérique (14).

28. Appareil selon la revendication 27, dans lequel ledit moyen de retard et de sommation comprend un moyen de stockage pour stocker des échantillons numérisés produits depuis lesdites N têtes (1A...) selon une pluralité d'intervalles d'échantillonnage k, (k-1), (k-2), ..., (k-1-n), ... ; et un moyen d'accumulateur pour accumuler la somme des échantillons numérisés produits depuis lesdites autres têtes lors du (k-1)-ième intervalle d'échantillonnage et des échantillons numérisés produits par lesdites têtes déplacées (1A...) lors du (k-1-n)-ième intervalle d'échantillonnage, où n est une fonction dudit retard τ et dudit intervalle d'échantillonnage.
